# EUROPEAN PATENT SPECIFICATION

(11) **EP 4 546 889 B1**
(45) Date of publication and mention of the grant of the patent: **14.10.2026**
(21) Application number: 23920791.3
(22) Date of filing: 08.11.2023
(51) Int. Cl.: H04W 52/02, H04W 4/80, G06F 1/3215, H04B 5/77, H04M 1/72412, G06F 13/24, H04B 5/00

(54) **INTERRUPT PROCESSING METHOD AND ELECTRONIC DEVICE**
UNTERBRECHUNGSVERARBEITUNGSVERFAHREN UND ELEKTRONISCHE VORRICHTUNG
PROCÉDÉ DE TRAITEMENT D'INTERRUPTIONS ET DISPOSITIF ÉLECTRONIQUE

(30) Priority: 07.02.2023 CN 202310122498
(43) Date of publication of application: 30.04.2025
(73) Proprietor: Honor Device Co., Ltd., Shenzhen, Guangdong 518040 (CN)
(72) Inventor: ZHAO, Heping, Shenzhen, Guangdong 518040 (CN); LAO, Huajian, Shenzhen, Guangdong 518040 (CN)
(74) Representative: Isarpatent
(86) International application number: PCT/CN2023/130559
(87) International publication number: WO 2024/164599

(56) References cited:
- CN-A- 102 830 875
- CN-A- 107 544 838
- CN-A- 113 867 918
- CN-A- 115 601 029
- US-A1- 2010 036 986
- US-A1- 2014 195 708

## Description

Priority is claimed to Chinese Patent Application No. 202310122498.8, filed with the China National Intellectual Property Administration on February 7, 2023 and entitled "INTERRUPT PROCESSING METHOD AND ELECTRONIC DEVICE".

### TECHNICAL FIELD

This disclosure generally relates to the field of terminal technologies, and the invention in particular relates to an interrupt processing method and an electronic device as well as a computer-readable storage medium.

### BACKGROUND

With development and popularization of a near field communication (NFC) technology, more electronic devices (for example, mobile phones) use the NFC technology. When an NFC object (for example, a bus card or a vehicle key) is close to an NFC sensing area of a mobile phone, the mobile phone is triggered to generate an NFC interrupt signal and process the NFC interrupt signal.

In daily life, a user does not need to use an NFC function of the mobile phone. After the mobile phone and the NFC object are placed together, if the NFC object is close to the mobile phone for a long time, the mobile phone generates and processes a large quantity of NFC interrupt signals. Consequently, the electronic device consumes power relatively quickly, a standby time is shortened, and a heating problem occurs. For example, the user often places the bus card and the mobile phone together in a pocket or a bag. If the bus card is continuously in a state of being close to the mobile phone, the mobile phone is triggered to generate a large quantity of NFC interrupt signals, and needs to process the large quantity of NFC interrupt signals, resulting in relatively high power consumption of the mobile phone.

CN 115 601 029 A discloses an NFC function control method, an NFC function control device and a storage medium. The NFC function control method comprises the step of closing an NFC read-write function when an NFC card reading event is detected and the NFC card reading event is determined to be a card reading event triggered by non-user active operation. Through the method, the NFC read-write function can be closed under the condition that the NFC card reading event is detected and the NFC card reading event is determined to be a card reading event triggered by non-user active operation, and the card reading event triggered by the non-user active operation can be paused, so that the purpose of reducing the power consumption of the terminal can be achieved, and the user experience of the user is improved.

### SUMMARY

In view of this, the object of the present invention is to provide an interrupt processing method and an electronic device as well as a computer-readable storage medium, to reduce an amount of power consumed by the electronic device.

According to a first aspect according to the invention, the invention provides an interrupt processing method. When an electronic device senses an NFC product, the electronic device may generate a first quantity (for example, N) of NFC interrupt signals in a first time period.

The NFC interrupt signal in the first time period does not need to be filtered. Therefore, in the first time period, the electronic device may initiate the first quantity of times of interrupt processing for the first quantity of NFC interrupt signals, that is, the electronic device may perform the first quantity of times of interrupt processing.

The electronic device generates a second quantity of NFC interrupt signals in a second time period. The second time period is later than the first time period.

When the first quantity is greater than a first preset threshold, it indicates that the electronic device generates a large quantity of NFC interrupt signals, and the electronic device initiates a third quantity of times of interrupt processing based on a third quantity (for example, M) of NFC interrupt signals in the second quantity of NFC interrupt signals, that is, the electronic device may perform the third quantity of times of interrupt processing. The third quantity is less than the second quantity.

For example, the third quantity may be 1. The third quantity represents a filtering threshold of the NFC interrupt signal, that is, a quantity of NFC interrupt signals that do not need to be intercepted.

In this application, when a quantity of NFC interrupt signals generated in a previous time period (for example, the first time period) of a time period (for example, the second time period) is greater than the first preset threshold, it indicates that the electronic device generates a large quantity of NFC interrupt signals, and in the time period, the electronic device starts an interrupt interception mechanism, that is, may process only some (for example, one) of NFC interrupt signals generated in the time period, and does not need to process all of the NFC interrupt signals generated in the time period. In this way, while it is met that a user normally uses an NFC function of the electronic device, that is, while an NFC service is successfully implemented, power consumption of the electronic device can be reduced, and therefore an amount of power consumed by the electronic device can be reduced, and a heating problem in the electronic device can be avoided. In addition, when the electronic device is in a standby state, standby duration of the electronic device can be prolonged, thereby improving user experience.

In a possible implementation of the first aspect, when the first quantity is less than the first preset threshold, it indicates that the electronic device generates a relatively small quantity of NFC interrupt signals, and the electronic device may initiate a second quantity of times of interrupt processing based on the second quantity of NFC interrupt signals, that is, the electronic device may perform the second quantity of times of interrupt processing, that is, process all of the NFC interrupt signals generated in the second time period. Because a relatively small quantity of NFC interrupt signals are generated in the second time period, even if all of the signals are processed, there is a relatively small increase in the power consumption. Therefore, the electronic device may process all of the NFC interrupt signals generated in the second time period, so that when the NFC interrupt signal is generated because the electronic device is used as a virtual NFC object, the electronic device can successfully implement an NFC service.

In a possible implementation of the first aspect, the electronic device generates a fourth quantity of NFC interrupt signals in a third time period. The third time period is later than the second time period. The fourth quantity is less than the first quantity, and the fourth quantity is less than the second quantity.

When the fourth quantity is less than or equal to the third quantity, it indicates that the electronic device generates a very small quantity of NFC interrupt signals in the third time period, and does not need to perform filtering, and the electronic device may initiate a fourth quantity of times of interrupt processing based on the fourth quantity of NFC interrupt signals, that is, the electronic device may perform the fourth quantity of times of interrupt processing, that is, may process all of the NFC interrupt signals generated in the third time period, to avoid unnecessary interrupt interception.

In a possible implementation of the first aspect, the electronic device generates a fifth quantity of NFC interrupt signals in a fourth time period. The fourth time period is later than the third time period. The fifth quantity is greater than the fourth quantity.

Because a relatively small quantity of NFC interrupt signals generated in the third time period indicates that the electronic device generates a relatively small quantity of NFC interrupt signals, the electronic device does not need to filter the NFC interrupt signals generated in the fourth time period, and the electronic device may process all of the NFC interrupt signals generated in the fourth time period, that is, the electronic device may initiate a fifth quantity of times of interrupt processing for the fifth quantity of NFC interrupt signals, that is, the electronic device may perform the fifth quantity of times of interrupt processing.

In a possible implementation of the first aspect, the electronic device generates a sixth quantity of NFC interrupt signals in a fifth time period. The fifth time period is later than the fourth time period. The sixth quantity is greater than the fourth quantity.

When the fifth quantity is greater than the first preset threshold, it indicates that the electronic device generates a large quantity of NFC interrupt signals, and the electronic device initiates a seventh quantity of times of interrupt processing for a seventh quantity of NFC interrupt signals in the sixth quantity of NFC interrupt signals, that is, the electronic device may perform the seventh quantity of times of interrupt processing.

The seventh quantity is less than the sixth quantity. The seventh quantity also represents a filtering threshold of the NFC interrupt signal, that is, a quantity of NFC interrupt signals that do not need to be intercepted. A value of the seventh quantity may be the same as or different from a value of the third quantity. This is not limited in this application.

In a possible implementation of the first aspect, the electronic device counts, by using a counter, a quantity of NFC interrupt signals generated in each time period (for example, the first time period, the second time period, the third time period, the fourth time period, and the fifth time period). Each time the electronic device generates an NFC interrupt signal, the counter performs counting once.

In a possible implementation of the first aspect, the electronic device may determine, by using a first mark (or referred to as a mark 1), whether to filter the NFC interrupt signal generated in the second time period. The first mark indicates whether the first quantity is greater than the first preset threshold. When the first mark is a first preset identifier, it indicates that the first quantity is greater than the first preset threshold, and the electronic device may filter the NFC interrupt signal generated in the second time period, that is, process the third quantity of NFC interrupt signals. When the first mark is a second preset identifier, it indicates that the first quantity is less than the first preset threshold, and the electronic device may not filter the NFC interrupt signal generated in the second time period, that is, process all of the NFC interrupt signals generated in the second time period.

Alternatively, the electronic device may determine, by detecting whether a second mark (or referred to as a mark 2) is present, whether to filter the NFC interrupt signal generated in the second time period. The second mark is used to indicate that the first quantity is greater than the first preset threshold. If the second mark is detected, it indicates that the first quantity is greater than the first preset threshold, and the electronic device may process the third quantity of NFC interrupt signals. If the second mark is not detected, it indicates that the first quantity is less than the first preset threshold, and the electronic device may process all of the NFC interrupt signals generated in the second time period.

In a possible implementation of the first aspect, in the second time period, after the electronic device generates the NFC interrupt signal, when the electronic device meets a first preset condition, it indicates that the NFC interrupt signal is generated because the electronic device is used as a virtual NFC object, and the NFC interrupt signal does not need to be intercepted, and the electronic device may perform interrupt processing based on the NFC interrupt signal, and may reset the counter, and modify the first mark to the second preset identifier, or clear the second mark, so that when the NFC interrupt signal is generated because the electronic device is used as a virtual NFC object, the electronic device can successfully implement an NFC service.

When the electronic device does not meet the first preset condition, and the first quantity is greater than the first preset threshold, the electronic device may filter the NFC interrupt signal generated in the second time period.

The first preset condition includes at least one of the following: The electronic device is in a screen-on state, a foreground application of the electronic device is an NFC application in the electronic device, and an NFC component in the electronic device is in a write mode.

In a case, the electronic device may determine, by detecting whether a third mark (or referred to as a mark 3) is present, whether the electronic device meets the first preset condition. If the third mark is present, it indicates that the electronic device does not meet the first preset condition. If the third mark is absent, it indicates that the electronic device meets the first preset condition. In another case, the electronic device may determine, by obtaining a specific value of a fourth mark (or referred to as a mark 4), whether the electronic device meets the first preset condition. If the fourth mark is a third preset identifier, it indicates that the electronic device does not meet the first preset condition. If the fourth mark is a fourth preset identifier, it indicates that the electronic device meets the first preset condition.

For example, each time an NFC interrupt signal is generated, the electronic device may determine whether the electronic device meets the first preset condition. Alternatively, it may be determined, only when an NFC interrupt signal generated for the first time in a time period is obtained, whether the electronic device meets the first preset condition, and a determining result is used as a determining result corresponding to each NFC interrupt signal generated in the time period.

In a possible implementation of the first aspect, after the electronic device generates a first NFC interrupt signal, if a generation time difference between the first NFC interrupt signal and a previous NFC interrupt signal of the first NFC interrupt signal is greater than a preset time, it indicates that there is a relatively long time interval between the two NFC interrupt signals, that is, it indicates that the electronic device generates a relatively small quantity of NFC interrupt signals. Therefore, the electronic device may directly perform interrupt processing based on the first NFC interrupt signal, for example, may perform interrupt processing on the first NFC interrupt signal, or perform interrupt processing on the first NFC interrupt signal and another NFC interrupt signal in a time period in which the first NFC interrupt signal is located (or described as "perform interrupt processing on an NFC interrupt signal in a time period in which the first NFC interrupt signal is located"), to avoid unnecessary interrupt interception, so that when the NFC interrupt signal is generated because the electronic device is used as an NFC object, the electronic device can successfully implement an NFC service.

The electronic device may further initialize the counter, that is, reset the counter, and modify the first mark to the second preset identifier, or clear the second mark, so that after the electronic device generates a new NFC interrupt signal, counting may be started again, that is, the first time period may be re-entered.

For example, the first NFC interrupt signal is generated in a next time period, and the next time period may be a next time period of the first time period, the second time period, the third time period, the fourth time period, or the fifth time period.

In a possible implementation of the first aspect, after the electronic device generates a first NFC interrupt signal, if an NFC product identifier corresponding to the first NFC interrupt signal is different from an NFC product identifier corresponding to a previous NFC interrupt signal of the first NFC interrupt signal, it indicates that the two NFC interrupt signals belong to different NFC products. To avoid a case in which a related NFC service cannot be processed because the first NFC interrupt signal is generated because the electronic device is used as a virtual NFC object, the electronic device may directly perform interrupt processing based on the first NFC interrupt signal, to avoid unnecessary interrupt interception, so that when the NFC interrupt signal is generated because the electronic device is used as an NFC object, the electronic device can successfully implement an NFC service. In addition, the electronic device may further reset the counter, and modify the first mark to the second preset identifier, or clear the second mark, so that after the electronic device generates a new NFC interrupt signal, counting may be started again.

If the NFC product identifier corresponding to the first NFC interrupt signal is the same as the NFC product identifier corresponding to the previous NFC interrupt signal of the first NFC interrupt signal, it indicates that the two NFC interrupt signals belong to a same NFC product, and the electronic device may perform counting by using the counter.

In a possible implementation of the first aspect, the electronic device may display first prompt information after the first time period. The first prompt information is used to prompt the user that an abnormal NFC product touches the electronic device, and advise the user to separately place the electronic device and the NFC product, that is, advise the user not to place the electronic device and the NFC product together, to prevent the electronic device form generating an NFC interrupt storm.

In another possible implementation of the first aspect, a process of the interrupt processing may include:

When receiving an NFC broadcast message, a target NFC application in the electronic device processes an NFC interrupt based on the NFC broadcast message. The target NFC application represents an NFC application that is in the electronic device and that is registered to listen for an NFC message. The NFC broadcast message is generated based on an NFC interrupt event. The NFC interrupt event is generated based on any NFC interrupt signal generated by the electronic device in the first time period. The NFC broadcast message includes an identifier of the NFC product and/or a type of the NFC product, to successfully process the NFC interrupt signal. That is, the interrupt processing may include: generating the NFC interrupt event, sending the NFC broadcast message, and starting the target NFC application.

In a possible implementation of the first aspect, in the second time period, the foregoing Linux kernel generates a third quantity of NFC interrupt events based on the second quantity of NFC interrupt signals.

In a possible implementation of the first aspect, a process of determining the target NFC application is as follows:

In an example, if there are a plurality of NFC applications in the electronic device, indicating that there are a plurality of NFC applications that can process the NFC interrupt signal, the electronic device may perform target interrupt processing, and display second prompt information. The second prompt information includes an option of at least one NFC application, to prompt the user to select an NFC application for processing the NFC product. The target NFC application is the NFC application selected by the user. The target interrupt processing may be any interrupt processing that needs to be performed by the electronic device. For example, the target interrupt processing is first interrupt processing in the third quantity of times of interrupt processing.

For example, before processing the NFC interrupt based on the NFC broadcast message, the electronic device displays the second prompt information.

In another example, if there are a plurality of NFC applications in the electronic device, and a default NFC application is set in the NFC applications, the target NFC application may be the default NFC application.

In another example, if the foreground application of the electronic device is an NFC application, indicating that the NFC application may be an NFC application that the user wants to use, the target NFC application may be the NFC application indicated by the foreground application.

In another example, when a foreground interface of the electronic device is an NFC interface in an NFC application, it indicates that the NFC application occupies a related NFC resource of the mobile phone. In this case, the target NFC application may be the NFC application, and the NFC interface indicates an interface that provides an NFC function in the NFC application.

In a possible implementation of the first aspect, initiating one time of interrupt processing includes at least one of generating one NFC interrupt event, sending one NFC broadcast message, and starting the target NFC application for one time. That is, when initiating one time of interrupt processing, the electronic device may perform all or some of the steps in the interrupt processing described above. That is, when one time of interrupt processing is initiated, at least one step of generating one NFC interrupt event, sending one NFC broadcast message, and starting the target NFC application for one time may be performed. For example, when the electronic device initiates N times (for example, the first quantity of times) of interrupt processing, the electronic device may perform at least one of generating N NFC interrupt events, sending N NFC broadcast messages, and starting the target NFC application for N times.

According to a second aspect according to the invention, the invention provides an electronic device. The electronic device includes an NFC component, a storage, and one or more processors. The storage is electrically connected to the NFC component and the processor.

The display is configured to display an image generated by the processor, the storage is configured to store computer program code, and the computer program code is executed to implement the following method:

The display is configured to display an image generated by the processor, the storage is configured to store computer program code, and the computer program code includes computer instructions.

The NFC component is configured to: sense an NFC product, generate a first quantity of NFC interrupt signals in a first time period, and send the first quantity of NFC interrupt signals to the processor.

The processor is configured to initiate the first quantity of times of interrupt processing for the first quantity of NFC interrupt signals.

The NFC component is further configured to: generate a second quantity of NFC interrupt signals in a second time period, and send the second quantity of NFC interrupt signals to the processor. The second time period is later than the first time period.

The processor is further configured to initiate a third quantity of times of interrupt processing for the second quantity of NFC interrupt signals. The third quantity is less than the second quantity.

For example, when the processor executes the computer instructions, the electronic device is enabled to perform the method according to any one of the first aspect and the possible implementations of the first aspect.

In another possible implementation of the second aspect, a Linux kernel on the processor is configured to: generate an NFC interrupt event for the NFC interrupt signal, and send the NFC interrupt event to an NFC process in the electronic device.

The NFC process is configured to send an NFC broadcast message for the NFC interrupt event. The NFC broadcast message is used to trigger a target NFC application in the electronic device to process an NFC interrupt for the NFC broadcast message.

According to a third not claimed aspect, this application provides a chip. The chip stores computer program code, and the chip executes the computer program code to implement the following method: The chip receives a first quantity of NFC interrupt signals in a first time period. The chip initiates the first quantity of times of interrupt processing for the first quantity of NFC interrupt signals.

The chip receives a second quantity of NFC interrupt signals in a second time period. The second time period is later than the first time period. The chip initiates a third quantity of times of interrupt processing for the second quantity of NFC interrupt signals. The third quantity is less than the second quantity.

For example, the chip is alternatively referred to as an application processor AP, an AP processor, an AP chip, or a processor.

According to a fourth aspect according to the invention, the invention provides a computer-readable storage medium, including computer instructions. When the computer instructions are run on an electronic device, the electronic device is enabled to perform the method according to any one of the first aspect and the possible implementations of the first aspect.

According to a fifth not claimed aspect, this application provides a computer program product. When the computer program product runs on an electronic device, the electronic device is enabled to perform the method according to any one of the first aspect and the possible implementations of the first aspect.

It may be understood that for beneficial effects that can be achieved by the electronic device according to the second aspect, the chip according to the third aspect, the computer storage medium according to the fourth aspect, and the computer program product according to the fifth aspect, refer to the beneficial effects in any one of the first aspect and the possible implementations of the first aspect. Details are not described herein again.

### BRIEF DESCRIPTION OF DRAWINGS

FIG. 1A is a schematic diagram of an NFC object display interface according to an embodiment of this application;
FIG. 1B is a schematic diagram of card swiping according to an embodiment of this application;
FIG. 2A is a schematic diagram of a touch according to an embodiment of this application;
FIG. 2B is a schematic diagram of NFC product interaction according to an embodiment of this application;
FIG. 3 is a schematic diagram of a hardware structure of an electronic device according to an embodiment of this application;
FIG. 4 is a schematic diagram of a structural block diagram of an electronic device according to an embodiment of this application;
FIG. 5 is a schematic flowchart 1 of an interrupt processing method according to an embodiment of this application;
FIG. 6 is a schematic diagram 1 of prompt information display according to an embodiment of this application;
FIG. 7A is a schematic diagram 2 of prompt information display according to an embodiment of this application;
FIG. 7B is a schematic diagram 3 of prompt information display according to an embodiment of this application;
FIG. 8 is a schematic diagram 1 of an NFC interrupt signal processing procedure according to an embodiment of this application;
FIG. 9 is a schematic diagram of performing an interrupt request processing procedure according to an embodiment of this application;
FIG. 10A, FIG. 10B, and FIG. 10C are a schematic flowchart 2 of an interrupt processing method according to an embodiment of this application;
FIG. 11A is a schematic diagram 1 of log display according to an embodiment of this application;
FIG. 11B is a schematic diagram 2 of log display according to an embodiment of this application;
FIG. 11C is a schematic diagram 3 of log display according to an embodiment of this application;
FIG. 11D is a schematic diagram 4 of log display according to an embodiment of this application;
FIG. 11E is a schematic diagram 5 of log display according to an embodiment of this application; and
FIG. 12 is a schematic diagram 2 of an NFC interrupt signal processing procedure according to an embodiment of this application.

### DESCRIPTION OF EMBODIMENTS

In the following descriptions, the terms "first" and "second" are used merely for the purpose of description, and shall not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

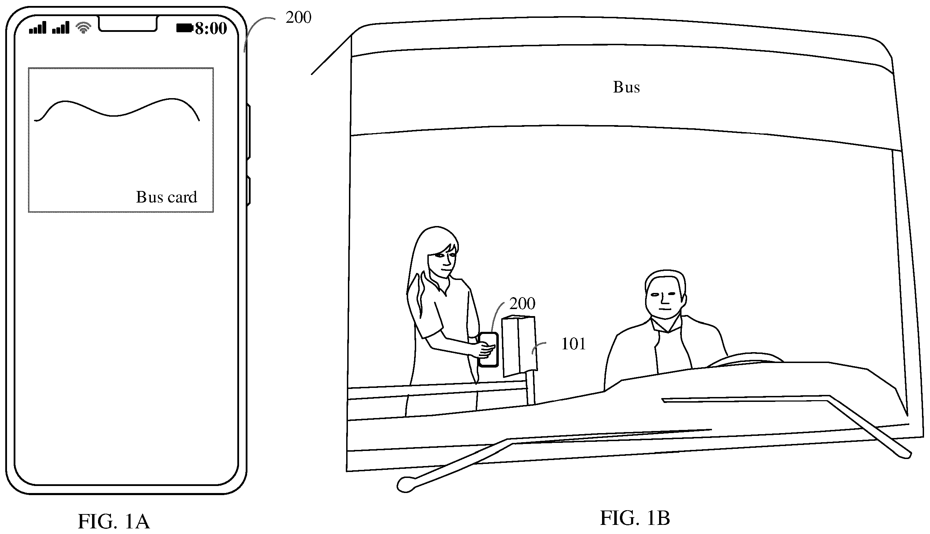

A user may bring an NFC object (for example, an NFC card or a vehicle key) close to a mobile phone (for example, close to an NFC sensing area of the mobile phone), to trigger the mobile phone to generate an NFC interrupt signal and process an NFC interrupt, so as to add information about the NFC object to the mobile phone, so that the user can use a virtual NFC object based on an NFC function of the mobile phone. The NFC object may include an NFC card, a vehicle key, or another NFC object. For example, the NFC card may include an access card, a bus card, a bank card, or a prepaid card. For example, as shown in FIG. 1A, information about a bus card is added to an electronic device 200. When a user needs to pay a transportation fee, as shown in FIG. 1B, the user may bring the electronic device 200 in which an NFC switch is turned on close to a card swipe machine 101 on a bus. The electronic device 200 herein may be used as a bus card, and may pay the transportation fee.

It should be understood that the "close" may indicate that there is a relatively short distance between two objects (for example, the electronic device 200 is very close to the card swipe machine 101), and one object can sense the other object, or the "close" indicates that two objects touch each other (for example, the electronic device 200 is in contact with the card swipe machine 101), and one object can sense the other object.

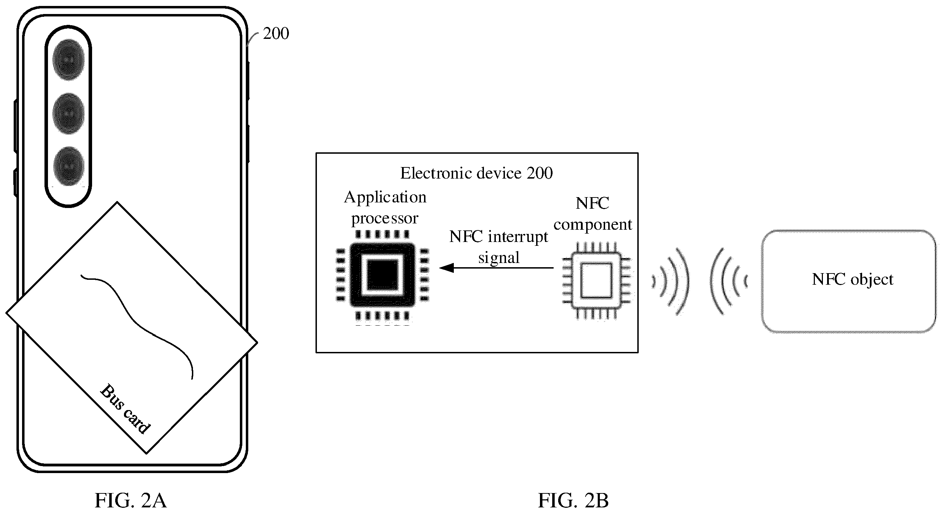

In some scenarios, the NFC object may be close to the electronic device for a long time, and therefore the electronic device frequently senses the NFC object. If an NFC switch of the electronic device is turned on, when the electronic device frequently senses the NFC object, the electronic device may generate a large quantity of NFC interrupt signals. When a quantity of generated NFC interrupt signals is large to some extent, an interrupt storm phenomenon may occur in the electronic device. In addition, each time the electronic device generates an NFC interrupt signal (that is, an NFC interrupt occurs once), the electronic device needs to perform one time of interrupt processing based on the generated NFC interrupt signal. In this application, the interrupt processing refers to a process of processing an NFC interrupt in response to the NFC interrupt signal. This increases power consumption of the electronic device. Consequently, the electronic device consumes power relatively quickly, and a heating problem may occur in the electronic device. In addition, when the electronic device is in a standby state, a standby time of the electronic device is shortened because the electronic device consumes power relatively quickly, diminishing user satisfaction. For example, the NFC object is a bus card. The user often places the bus card and the mobile phone in a clothes pocket or a bag. Due to limited space, the bus card is prone to be close to the mobile phone (for example, the bus card touches the mobile phone, or there is a very short distance between the bus card and the mobile phone). As shown in FIG. 2A, a bus card is close to a rear cover of a mobile phone 200, and the bus card touches the mobile phone 200. When the bus card frequently touches the mobile phone 200, the mobile phone generates a large quantity of NFC interrupt signals, and the mobile phone 200 needs to process the large quantity of NFC interrupt signals. Consequently, the mobile phone consumes power relatively quickly.

In some embodiments, as shown in FIG. 2B, the electronic device 200 may include an NFC component and an application processor (application processor, AP). When the NFC component in the electronic device 200 senses the NFC object, the NFC component may generate an NFC interrupt signal. Then, the NFC component may send the NFC interrupt signal to the AP, so that the AP processes the NFC interrupt signal, for example, the AP transmits data to the NFC object through the NFC component. When the NFC component frequently senses the NFC object, for example, the NFC component is close to the electronic device for a long time, the NFC component generates a large quantity of NFC interrupt signals, and the AP needs to process the large quantity of NFC interrupt signals, resulting in an increase in power consumption of the AP and the NFC component. Consequently, the electronic device consumes power relatively quickly.

For example, the NFC component in the electronic device 200 may include an NFC chip and an NFC antenna. The NFC chip has a communication function and a specific computing capability. The NFC antenna is a near field coupling antenna. Generally, the NFC antenna includes a coupling coil (or referred to as an NFC coil) and a magnetic film.

For example, the transmitting data may indicate that the AP in the electronic device 200 writes data into the NFC object through the NFC component in the electronic device 200, or the transmitting data may indicate that the AP reads data from the NFC object through the NFC component.

It should be noted that when the NFC object is close to the electronic device, an NFC coil in the NFC object may be a passive coil, and the NFC coil in the electronic device 200 may be an active coil. In other words, the NFC object is equivalent to a passive NFC product, and the electronic device 200 is equivalent to an active NFC product. The electronic device 200 generates mutual inductance with the NFC object. In a mutual inductance process, the NFC object may obtain power from the NFC coil in the electronic device 200, so that the NFC object can perform a communication operation (for example, transmit data to the NFC chip in the mobile phone) by using the power.

Correspondingly, when the user uses a virtual NFC object (or described as "when the electronic device 200 is used as a virtual NFC object") based on an NFC function of the electronic device 200, the electronic device 200 is equivalent to a passive NFC product. As shown in FIG. 1B, when the electronic device is close to the card swipe machine, the electronic device is equivalent to a passive NFC product, and the card swipe machine is equivalent to an active NFC product.

Therefore, to resolve the foregoing problem, this application provides an interrupt processing method. Considering that when a user uses a virtual NFC object such as a virtual bus card based on an NFC function of an electronic device, that is, considering that when the electronic device is used as a passive NFC product, the electronic device needs to process only some of generated NFC interrupt signals to successfully implement a related NFC service (for example, pay a transportation fee), when the electronic device senses an NFC product, the electronic device may generate an NFC interrupt signal. The electronic device counts a quantity of NFC interrupt signals generated by the electronic device in a first time period. In a next time period (that is, a second time period) of the first time period, when the electronic device determines that the quantity is greater than a first preset threshold, it indicates that the electronic device generates a large quantity of NFC interrupt signals, and the electronic device may perform interrupt processing on some of NFC interrupt signals generated by the electronic device in the second time period, and does not process all of the NFC interrupt signals generated in the second time period, to decrease a quantity of NFC interrupt signals processed by the electronic device. In this way, power consumption of the electronic device can be reduced, and therefore an amount of power consumed by the electronic device can be reduced, and standby duration of the electronic device can be effectively prolonged. In addition, even if the NFC interrupt signal generated by the electronic device is an NFC interrupt signal generated because the electronic device is used by the user as a virtual NFC object, a related NFC service can be successfully processed, to ensure user experience and avoid a heating problem that occurs in the electronic device because a large quantity of NFC interrupt signals need to be processed.

For example, the electronic device in the embodiments of this application may be a device including an NFC component and an AP, for example, a mobile phone, a tablet computer, a wearable device, or a personal digital assistant (personal digital assistant, PDA). A specific form of the electronic device is not specifically limited in the embodiments of this application.

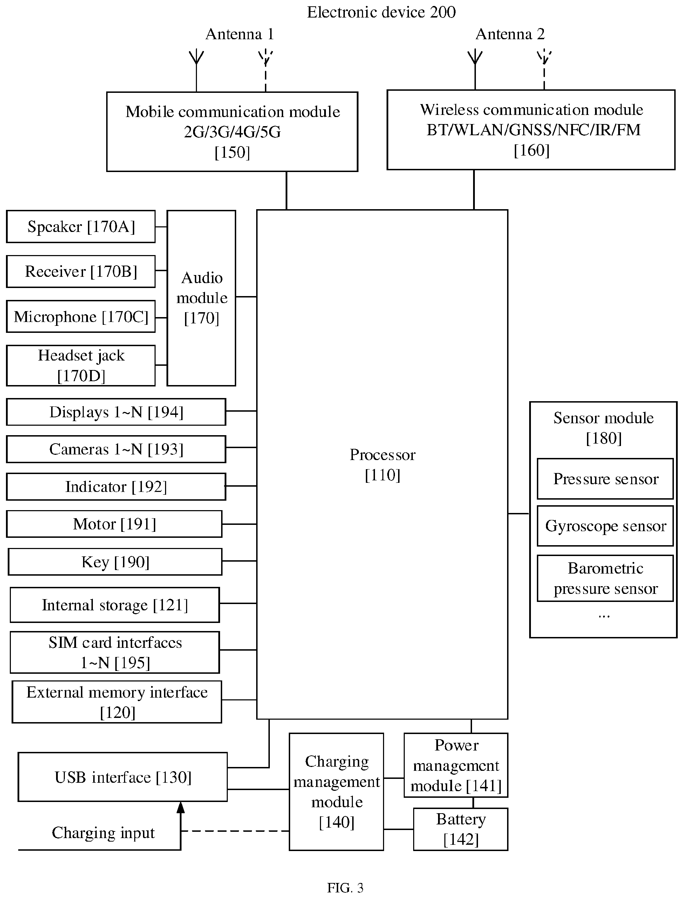

For example, FIG. 3 is a schematic diagram of a structure of an electronic device 200. As shown in FIG. 3, the electronic device 200 may include a processor 110, an external memory interface 120, an internal storage 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identification module, SIM) card interface 195, and the like.

It may be understood that the structure shown in this embodiment of this application constitutes no specific limitation on the electronic device 200. In some other embodiments of this application, the electronic device 200 may include more or fewer parts than those shown in the figure, some parts may be combined, some parts may be split, or there may be different part arrangements. The parts shown in the figure may be implemented by using hardware, software, or a combination of software and hardware.

The processor 110 may include one or more processing units. For example, the processor 110 may include an AP, a modem processor, a graphics processing unit (graphics processing unit, GPU), an image signal processor (image signal processor, ISP), a controller, a storage, a video codec, a digital signal processor (digital signal processor, DSP), a baseband processor, and/or a neural-network processing unit (neural-network processing unit, NPU). Different processing units may be independent components, or may be integrated into one or more processors.

For example, the processor 110 may be a central processing unit (central processing unit, CPU).

The controller may be a nerve center and a command center of the electronic device 200. The controller may generate an operation control signal based on instruction operation code and a timing signal, to complete control of instruction fetching and instruction execution.

The AP may be configured to process an NFC interrupt signal.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor may directly invoke the instructions or the data from the storage. This avoids repeated access and reduces a waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of the present invention is merely an example for description, and constitutes no limitation on the structure of the electronic device 200. In some other embodiments of this application, the electronic device 200 may alternatively use an interface connection manner different from that in the foregoing embodiment, or a combination of a plurality of interface connection manners.

The charging management module 140 is configured to receive a charging input from a charger. When charging the battery 142, the charging management module 140 may further supply power to the electronic device through the power management module 141.

A wireless communication function of the electronic device 200 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 200 may be configured to cover one or more communication bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a wireless communication solution that includes 2G/3G/4G/5G and the like and that is applied to the electronic device 200. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transfer a processed electromagnetic wave to the modem processor for demodulation. The mobile communication module 150 may further amplify a signal obtained after modulation by the modem processor, and convert, through the antenna 1, an amplified signal into an electromagnetic wave for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110 and disposed in a same component as the mobile communication module 150 or another functional module.

The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), NFC, an infrared (infrared, IR) technology, and the like and that is applied to the electronic device 200. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

The wireless communication module 160 may include an NFC component, and the NFC component is configured to provide the foregoing NFC wireless communication solution. The NFC component may sense (that is, detect) an NFC object or a device that touches the electronic device.

The NFC component may be connected to the AP through a wire, and the NFC component may communicate with the AP. When the NFC component senses an external NFC object, the NFC component may generate an NFC interrupt signal, and send the NFC interrupt signal to the AP, so that the AP processes the NFC interrupt signal.

For example, the NFC component may include an NFC antenna and an NFC chip.

In some embodiments, in the electronic device 200, the antenna 1 and the mobile communication module 150 are coupled, and the antenna 2 and the wireless communication module 160 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 200 implements a display function by using the GPU, the display (that is, a screen) 194, the application processor, and the like. The GPU is a microprocessor for image processing and is connected to the display 194 and the application processor. The GPU is configured to perform mathematical and geometric calculation for graphics rendering. The processor 110 may include one or more GPUs, and the one or more GPUs execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 200 may include one or N displays 194, where N is a positive integer greater than 1.

The electronic device 200 may implement a shooting function by using the ISP, the camera 193, the video codec, the GPU, the display 194, the application processor, and the like.

The external memory interface 120 may be configured to be connected to an external memory card, for example, a Micro SD card, to expand a storage capability of the electronic device 200.

The internal storage 121 may be configured to store computer-executable program code, and the executable program code includes instructions. The processor 110 runs the instructions stored in the internal storage 121, to perform various function applications and data processing of the electronic device 200. The internal storage 121 may include a program storage area and a data storage area. The program storage area may store an operating system, an application required by at least one function (for example, a sound playing function and an image playing function), and the like. The data storage area may store data (for example, audio data and a phone book) created during use of the electronic device 200. In addition, the internal storage 121 may include a high-speed random access memory, and may further include a nonvolatile memory, for example, at least one magnetic disk storage device, a flash memory device, or a universal flash storage (universal flash storage, UFS).

The electronic device 200 may implement an audio function by using the audio module 170, the speaker 170A, the receiver 170B, the microphone 170C, the headset jack 170D, the application processor, and the like. For example, music playing and sound recording are implemented.

In some embodiments, the sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The key 190 includes a power-on/off key, a volume key, and the like. The motor 191 may generate a vibration prompt.

The indicator 192 may be an indicator light, may be configured to indicate a charging status or a power change, and may be further configured to indicate a message, a missed incoming call, a notification, and the like.

The SIM card interface 195 is configured to be connected to a SIM card. The SIM card may be inserted into the SIM card interface 195 or removed from the SIM card interface 195, to implement contact with and separation from the electronic device 200. The electronic device 200 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may be further compatible with SIM cards of different types. The SIM card interface 195 may be further compatible with an external memory card. The electronic device 200 interacts with a network by using the SIM card, to implement functions such as a call and data communication. In some embodiments, the electronic device 200 uses an eSIM, that is, an embedded SIM card. The eSIM card may be embedded in the electronic device 200 and cannot be separated from the electronic device 200.

For example, a software system of the electronic device 200 may use a layered architecture, an event-driven architecture, a microkernel architecture, a micro-service architecture, or a cloud architecture. In the embodiments of the present invention, an Android^{™} system with a layered architecture is used as an example to describe a software structure of the electronic device 200.

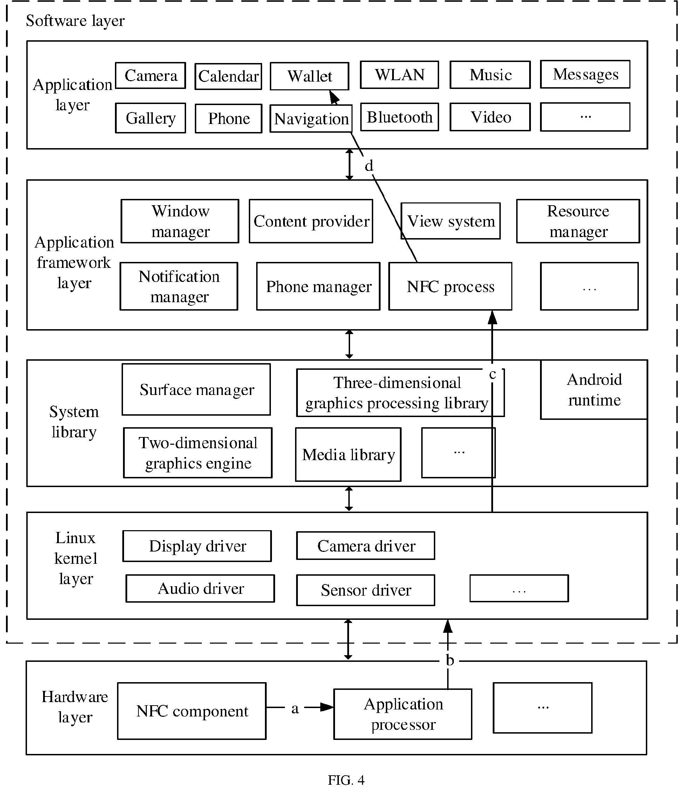

FIG. 4 is a block diagram of a structure of an electronic device 200 according to an embodiment of this application. In a layered architecture, software is divided into several layers, and each layer has a clear role and task. The layers communicate with each other through software interfaces. In some embodiments, an Android^{™} system is divided into four layers: an application layer, an application framework layer, an Android runtime (Android^{™} runtime) and system library, and a Linux kernel layer from top to bottom.

The application layer may include a series of application packages. As shown in FIG. 4, the application packages may include applications such as Camera, Gallery, Calendar, Phone, Wallet, Navigation, WLAN, Bluetooth, Music, Video, and Messages.

For example, Wallet is an NFC application. The application packages may further include another NFC application, and the another NFC application represents an application that includes an NFC function, that is, an application that needs to use an NFC technology.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, an NFC process, and the like.

The NFC process may be configured to send an NFC broadcast message to the application layer, to start a related NFC application at the application layer. For example, the NFC process runs in a com.android.nfc process, and an application file name corresponding to the process is Nfc.apk.

The window manager is configured to manage a window program. The window manager may obtain a size of a display, determine whether there is a status bar, lock a screen, take a screenshot, and the like.

The content provider is configured to store and obtain data, and enable the data to be accessible by an application. The data may include a video, an image, audio, calls that are made and answered, a browsing history and a bookmark, a phone book, and the like.

The view system includes visual controls, for example, a control for displaying a text and a control for displaying a picture. The view system may be configured to construct an application. A display interface may include one or more views. For example, a display interface including an SMS message notification icon may include a view for displaying a text and a view for displaying a picture.

The phone manager is configured to provide the electronic device 200 with a communication function, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to notify download completion, provide a message notification, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The Android^{™} runtime includes a kernel library and a virtual machine. The Android^{™} runtime is responsible for scheduling and management of the Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D graphics drawing.

The Linux kernel layer is a layer between hardware and software. The Linux kernel layer includes at least a display driver, a camera driver, an audio driver, and a sensor driver. The Linux kernel layer may communicate with a hardware layer. For example, the hardware layer may include an AP and an NFC component. Correspondingly, the hardware layer may communicate with an upper-layer application through the Linux kernel layer (that is, a Linux kernel), to process an NFC interrupt signal.

For example, with reference to FIG. 2B, as shown in FIG. 4, a process of generating an NFC interrupt signal and processing the NFC interrupt signal may include steps a-d.

a: When sensing an NFC object, the NFC component may send the NFC interrupt signal to the AP.

Optionally, when sensing the NFC object, the NFC component may generate the NFC interrupt signal.

For example, when the NFC object is close to a sensing area (that is, an NFC sensing area of the electronic device) of the NFC component, the NFC component may sense the NFC object. In this application, that the NFC object is close to an NFC sensing area of the electronic device means that a distance between the NFC object and the NFC sensing area of the electronic device is less than a preset distance. The preset distance may be 10 centimeters, 5 centimeters, or the like.

An expression manner in which the NFC object is close to the NFC component may be as follows: The NFC object touches the NFC sensing area of the electronic device, and the distance between the NFC object and the NFC sensing area of the electronic device is 0. For example, as shown in FIG. 2A, the bus card touches the mobile phone 200, and the bus card is close to the mobile phone 200. Another expression manner may be as follows: There is a very short distance between the NFC object and the NFC sensing area of the electronic device, but the NFC object and the NFC sensing area of the electronic device do not touch each other.

When sensing the NFC object, the NFC component may generate the NFC interrupt signal. In this way, when continuously sensing the NFC object, the NFC component may continuously generate the NFC interrupt signal, and continuously send the NFC interrupt signal to the AP.

For example, when the NFC object is kept in a state of being close to the NFC sensing area of the electronic device, the NFC component in the electronic device may continuously sense the NFC object.

It should be further noted that the NFC sensing area of the electronic device may be in a top area of a rear cover of the electronic device or a middle area of a rear cover of the electronic device.

b: After the AP receives the NFC interrupt signal, the Linux kernel layer processes the NFC interrupt signal.

For example, after receiving the NFC interrupt signal, an NFC interrupt process at the Linux kernel layer may read data of the NFC object (for example, an identifier and a type of the NFC object and other information), and store the data in a buffer at the Linux kernel layer.

c: The Linux kernel layer sends an NFC interrupt event to the NFC process in response to the NFC interrupt signal.

It should be noted that the NFC process may also be referred to as an NFC module. The NFC process reads the NFC interrupt event, and needs to enter a kernel mode (or referred to as an operating system state) from a user mode to directly access underlying data. When an interrupt is triggered, the NFC process switches from the user mode to the operating system state. The user mode may also be referred to as an application state. When the NFC process is in the application state, data access is limited, and the underlying data cannot be accessed.

d: After receiving the NFC interrupt event, the NFC process sends an NFC broadcast message. The wallet application receives the NFC broadcast message, and processes an NFC interrupt based on the NFC broadcast message.

In some embodiments, after receiving the NFC interrupt event, the NFC process reads the data of the NFC object from the buffer at the Linux kernel layer. For example, before reading the buffer at the Linux kernel layer, the NFC process needs to switch from the user mode to the kernel mode.

It may be understood that the NFC process may be a structure that includes a first flag bit and a second flag bit. The first flag bit indicates that the NFC process has permission to access the buffer at the Linux kernel layer. The second flag bit indicates whether the NFC process is currently in the kernel mode or the user mode.

The kernel mode indicates a state in which a peripheral, an AP register, and a memory at the Linux kernel layer can be accessed. When the process is in the user mode, the peripheral, the AP register, and the buffer at the Linux kernel layer cannot be accessed.

The peripheral may be a device other than the AP, for example, an NFC component, a Bluetooth chip, or a Wi-Fi chip.

Optionally, a scenario of accessing the AP register may include configuring a pin level (for example, when some peripherals are controlled, a pin voltage corresponding to the peripheral needs to be adjusted), invoking, by an application, a timer inside the AP, adjusting a frequency of a CPU, and the like.

Optionally, a scenario of accessing the memory at the Linux kernel layer may include performing data read/write by using a virtual filesystem switch (virtual filesystem switch, VFS), and the like.

In some embodiments, after receiving the NFC interrupt event, the NFC process may determine whether an event type corresponding to the NFC interrupt event is a first preset type. The first preset type represents a type that requires processing by the application. For example, the NFC interrupt process reads valid data of the NFC object (for example, the type of the NFC object and other information), and the event type corresponding to the NFC interrupt event may be the first preset type. For example, when the NFC component is abnormal, the NFC component may generate the NFC interrupt signal, but possibly cannot successfully read the data of the NFC object. Correspondingly, the event type corresponding to the NFC interrupt event is not the first preset type. For another example, when communication protocols between the NFC component and the NFC object are different, the NFC component cannot successfully read the data of the NFC object. Correspondingly, the event type corresponding to the NFC interrupt event is not the first preset type. For another example, in a process in which the NFC component reads the data of the NFC object, the NFC object is far away from the NFC component, that is, the NFC object is no longer close to the NFC component, resulting in a data read failure. Correspondingly, the event type corresponding to the NFC interrupt event is not the first preset type.

If the event type is the first preset type, the NFC process may send an NFC broadcast message based on the NFC interrupt event, so that the application processes the NFC interrupt. If the event type is not the first preset type, the NFC process does not need to send a broadcast message.

For example, the NFC broadcast message may include information such as the identifier and the type of the NFC object.

It may be understood that a Linux kernel runs on the AP in the electronic device 200. The Android system runs on the Linux kernel.

To reduce an amount of power consumed by an electronic device, after determining that a large quantity of NFC interrupt signals are generated, the electronic device in this application may process only some of the NFC interrupt signals instead of all of the NFC interrupt signals, to reduce power consumption caused due to processing of the NFC interrupt signal by the electronic device. The following describes an application scenario of the technical solutions of this application with reference to several examples.

In a scenario, when an NFC object is close to an electronic device, the electronic device senses the NFC object, and generates an NFC interrupt signal. When the electronic device is continuously close to the electronic device, the electronic device continuously (or described as "frequently") senses the NFC object, and the electronic device generates a large quantity of NFC interrupt signals. For example, when an NFC card and the electronic device are placed together for a long time at a space-limited location such as a pocket or a backpack, the NFC card is continuously in a state of being close to the electronic device, for example, the NFC card frequently touches the electronic device. The electronic device frequently senses the NFC object, and generates a large quantity of NFC interrupt signals. To reduce power consumption required by the mobile phone to process the large quantity of NFC interrupt signals, the electronic device may process only some of the NFC interrupt signals.

In another scenario, when a first device that supports an NFC function is close to an electronic device, the electronic device senses the first device, and then generates an NFC interrupt signal. When the first device is continuously close to the electronic device, the electronic device generates a large quantity of NFC interrupt signals. The first device may include a device including an NFC component, for example, a mobile phone, a tablet computer, a wearable device, or a personal digital assistant. For example, the first device is a mobile phone 1, and the electronic device is a mobile phone 2. When the mobile phone 1 and the mobile phone 2 are placed together for a long time, the mobile phone 2 generates a large quantity of NFC interrupt signals. Therefore, to reduce power consumption required for processing the large quantity of NFC interrupt signals, the electronic device may process only some of the NFC interrupt signals.

In another scenario, when a user uses a virtual NFC object such as a virtual bus card based on an NFC function of an electronic device, an NFC chip in the electronic device still continues to work for a specific time. Correspondingly, the NFC chip further continuously generates an NFC interrupt signal. Only after the specific time elapses, the NFC chip enters a sleep state. For example, after the user uses the virtual bus card on the electronic device to swipe a card swipe machine on a bus (which may be briefly described as "the electronic device swipes the bus card"), the NFC chip in the electronic device still generates a large quantity of NFC interrupt signals. Therefore, the electronic device may process only some of the NFC interrupt signals.

Certainly, the technical solutions of this application may be further applied to other scenarios in which a large quantity of NFC interrupt signals need to be generated. The other scenarios are not described one by one herein.

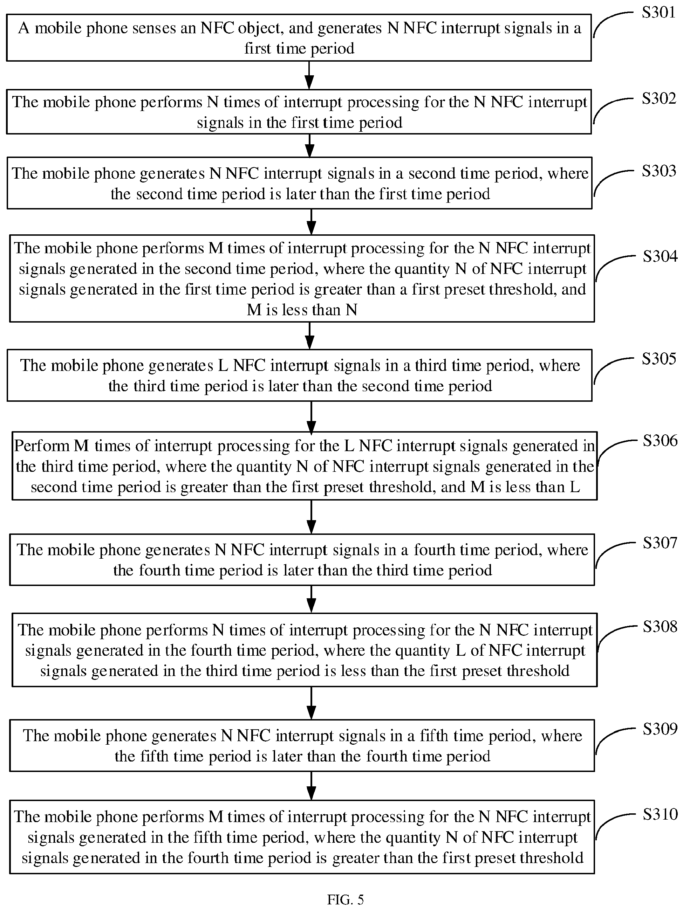

The following uses an example in which the electronic device is a mobile phone, and describes, with reference to the accompanying drawings, in detail the interrupt processing method provided in the embodiments of this application. As shown in FIG. 5, the method includes S301-S310.

S301: A mobile phone senses an NFC object, and generates N NFC interrupt signals in a first time period.

Optionally, after detecting an NFC touch operation, the mobile phone generates the NFC interrupt signal in response to the NFC touch operation. Herein, the NFC trigger operation indicates that when the NFC object touches the mobile phone (for example, an NFC sensing area of the mobile phone), the mobile phone senses the NFC object, and generates the NFC interrupt signal.

It should be understood that, that the NFC object touches the mobile phone is an example in which the NFC object is close to the mobile phone (or described as "the NFC object is in a state of being close to the mobile phone"). When the NFC object and the mobile phone do not touch each other, and a distance is very short, the mobile phone may also sense the NFC object, and generate the NFC interrupt signal. Herein, that a distance between the NFC object and the mobile phone is very short is also a case in which the NFC object is close to the mobile phone.

The NFC object is used as an example herein to describe the solutions of this application. An NFC interrupt signal may be generated when the mobile phone is close to an NFC product. After the NFC interrupt signal is generated, the mobile phone may process the NFC interrupt signal by using the solutions disclosed in this application. For example, the NFC product includes a product that uses an NFC technology, for example, an NFC object (for example, an NFC card such as a bank card, a bus card, a prepaid card, or an access card, or a vehicle key) and an NFC device (for example, a card swipe machine or a mobile phone).

S302: The mobile phone performs N times of interrupt processing for the N NFC interrupt signals in the first time period.

In this embodiment of this application, when sensing the NFC object, the mobile phone may generate the NFC interrupt signal. It needs to be determined whether the mobile phone generates a large quantity of NFC interrupt signals, and a case in which a user uses a virtual NFC object such as a virtual bus card based on an NFC function of the mobile phone needs to be considered. Therefore, when the mobile phone continuously senses the NFC object in the first time period, the mobile phone may continuously generate the NFC interrupt signal. Each time the mobile phone generates an NFC interrupt signal, the mobile phone may directly perform one time of interrupt processing (for example, an interrupt request (interrupt request, IRQ) processing procedure) based on the NFC interrupt signal, and does not need to start an interrupt interception mechanism, to normally process the NFC interrupt signal in the first time period, so that when the NFC object sensed by the mobile phone is actually an NFC device, that is, the NFC interrupt signal generated by the mobile phone is actually generated when the user uses the virtual NFC object such as the virtual bus card based on the NFC function of the mobile phone (or described as "the mobile phone is used as a virtual NFC object"), it can be ensured that a related NFC service can be successfully processed, to meet a requirement of the user for normal use of a related NFC function of the mobile phone.

In some embodiments, each time the mobile phone generates an NFC interrupt signal, counting may be performed once by using a counter, to determine a quantity of NFC interrupt signals generated in a different time period (for example, the first time period), so that the mobile phone determines, by using the quantity of NFC interrupt signals generated in the first time period, whether the mobile phone generates a large quantity of NFC interrupt signals, and then the mobile phone may determine whether an interrupt interception mechanism needs to be started in a next time period. The first time period may be a moment at which the mobile phone starts to generate the NFC interrupt signal, for example, a time at which the mobile phone generates a first NFC interrupt signal.

In some embodiments, after generating the NFC interrupt signal, the mobile phone may determine whether to filter the NFC interrupt signal based on the interrupt interception mechanism. A time period in which an NFC interrupt signal that does not need to be filtered is located may be the first time period.

In an example, the mobile phone may determine, based on a specific value of a mark 1, whether to filter the NFC interrupt signal. If the value of the mark 1 is a first preset identifier, it indicates that the NFC interrupt signal needs to be filtered based on the interrupt interception mechanism. If the value of the mark 1 is a second preset identifier, it indicates that the NFC interrupt signal does not need to be filtered. For example, the mobile phone senses the NFC object, and in each preset period, counts a quantity of NFC interrupt signals generated in the preset period. A time length of the preset period herein is a time period. After generating the NFC interrupt signal, the mobile phone determines whether the mark 1 is present. If the mark 1 is present, a preset period in which the NFC interrupt signal is located may be the first time period.

Duration of the preset period may be set based on an actual requirement. Generally, the preset period may be duration in which the mobile phone is used as an NFC object, for example, duration in which the user uses the mobile phone to touch a card swipe machine when a transportation fee is paid, that is, duration in which the mobile phone is used to swipe the bus card.

Optionally, the time at which the first NFC interrupt signal is generated when the mobile phone senses the NFC object may be considered as a start time of a first preset period.

In another example, the mobile phone determines, by determining whether a mark 2 is present in the mobile phone, whether to filter the NFC interrupt signal based on the interrupt interception mechanism. If the mark 2 is present, it indicates that the NFC interrupt signal needs to be filtered based on the interrupt interception mechanism. If the mark 2 is absent, it indicates that the NFC interrupt signal does not need to be filtered.

It should be understood that regardless of whether the mobile phone is in a standby state or a working state, when the NFC object is close to the mobile phone, the mobile phone senses the NFC object, and may generate the NFC interrupt signal.

For example, a process in which the mobile phone performs interrupt processing based on the NFC interrupt signal may include: First, the mobile phone may generate (or described as "generate") an NFC interrupt event based on the NFC interrupt signal. The NFC interrupt event may include information such as an identifier of an NFC product (for example, the NFC object) corresponding to the NFC interrupt signal, and a type of the NFC product. Then, the mobile phone may generate an NFC broadcast message based on the NFC interrupt event, and send the NFC broadcast message. The NFC broadcast message may include information such as the identifier of the NFC product and the type of the NFC product. Then, a target NFC application in the mobile phone receives the NFC broadcast message, and may process the NFC interrupt event based on the NFC broadcast message. The target NFC application is an NFC application that is in the mobile phone and that is registered to listen for an NFC message. It should be noted that there may be a plurality of NFC applications that are in the mobile phone and that are registered to listen for the NFC message. The target NFC application is an application that responds to the current NFC interrupt event in the plurality of NFC applications. In this application, the NFC application is an NFC application registered to listen for the NFC message.

It may be understood that generating an NFC interrupt event is a step of performing interrupt processing. One NFC interrupt event corresponds to one time of interrupt processing, and a quantity of times of interrupt processing performed indicates a quantity of generated interrupt events. That is, when one NFC interrupt event is generated, it may indicate that one time of interrupt processing is performed, and a quantity of generated NFC interrupt events indicates a quantity of times of interrupt processing performed. For example, the mobile phone generates the N interrupt signals in the first time period, and the mobile phone performs N times of interrupt processing, that is, the mobile phone generates N NFC interrupt events. Correspondingly, S302 may alternatively be described as "the mobile phone generates N NFC interrupt events for the N NFC interrupt signals in the first time period".

Generating an NFC broadcast message based on the NFC interrupt event is a step of performing interrupt processing. Optionally, performing interrupt processing may not include the step of generating an NFC broadcast message based on the NFC interrupt event. Correspondingly, performing interrupt processing also does not include these steps of sending the NFC broadcast message and processing, by the target NFC application, the NFC interrupt event based on the NFC broadcast message.

For example, when an event type corresponding to the NFC interrupt event is not a first preset type, performing interrupt processing does not include the step of generating an NFC broadcast message based on the NFC interrupt event. When an event type corresponding to the NFC interrupt event is a first preset type, performing interrupt processing may include the step of generating an NFC broadcast message based on the NFC interrupt event. In some scenarios, an example in which the step of generating an NFC broadcast message based on the NFC interrupt event is included each time interrupt processing is performed is used. The mobile phone generates the N NFC interrupt signals in the first time period, and the mobile phone performs N times of interrupt processing, that is, the mobile phone generates N NFC broadcast messages. Correspondingly, S302 may alternatively be described as "the mobile phone generates N NFC broadcast messages for the N NFC interrupt signals in the first time period", alternatively be described as "the mobile phone sends N NFC broadcast messages", or alternatively be described as "the target NFC application in the mobile phone is started for N times".

A process of determining the target NFC application may be described by using a plurality of following implementations.

In an implementation, if a quantity of NFC applications in the mobile phone is greater than or equal to 2, and a default NFC application is set in the NFC applications, the target NFC application may be the default NFC application.

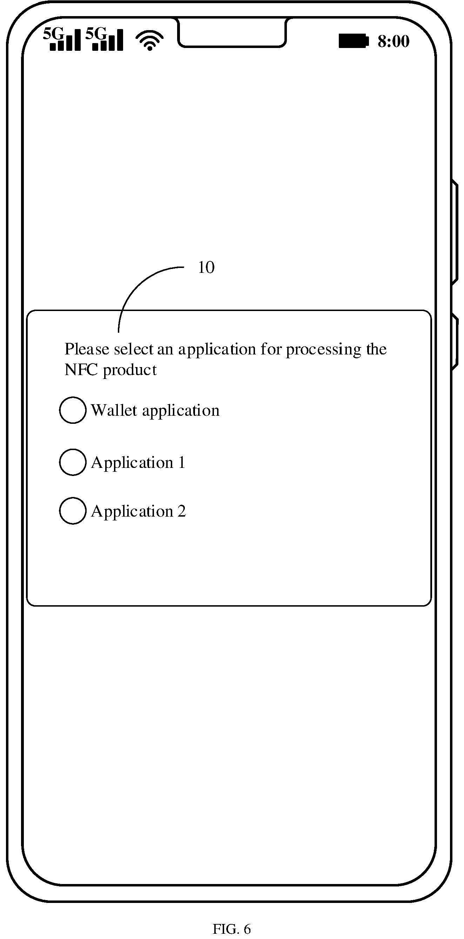

In another implementation, if a quantity of NFC applications in the mobile phone is greater than or equal to 2, and there is no default NFC application in the NFC applications, indicating that there are a plurality of NFC applications that can process the NFC interrupt signal, the mobile phone may display second prompt information. The second prompt information includes an option of at least one NFC application, and the second prompt information is used to prompt the user to select an NFC application for processing the NFC object. For example, the NFC applications in the mobile phone may include three NFC applications: a wallet application, an application 1, and an application 2. The mobile phone may display second prompt information 10 shown in FIG. 6. If the user selects the application 1, the mobile phone may use the application 1 as the target NFC application in response to the operation of selecting the application 1. The application 1 may process the NFC interrupt event based on the received NFC broadcast message.

In some embodiments, if the quantity of NFC applications in the mobile phone is greater than or equal to 2, after the mobile phone senses the NFC object, if a screen of the mobile phone is turned on, the mobile phone may display the second prompt information, or if a screen of the mobile phone is turned off, the screen is turned on and the second prompt information is displayed. If a screen of the mobile phone is turned on, the second prompt information is displayed. Alternatively, if a screen of the mobile phone is turned off, the mobile phone may not display the second prompt information, and display the second prompt information after the screen of the mobile phone is turned on, to avoid a case in which the user cannot view the second prompt information because the mobile phone is in a screen-off state and consequently unnecessary display is caused, so as to avoid a waste of resources.

In another implementation, if a foreground application of the mobile phone is an NFC application, after sensing the NFC object, the mobile phone displays an interface of the NFC application. When the foreground application of the mobile phone is an NFC application, it indicates that the NFC application may be an NFC application that the user wants to use. Therefore, the NFC application may be used as the target NFC application, and the interface of the NFC application may be displayed.

In another implementation, if a foreground application of the mobile phone is an NFC application, and a first interface of the foreground application displayed by the mobile phone is an NFC interface, after sensing the NFC object, the mobile phone continues to display the first interface. When the foreground application of the mobile phone is an NFC application, and the first interface of the foreground application displayed by the mobile phone is an NFC interface, it indicates that the NFC application occupies a related NFC resource of the mobile phone. The NFC application may be used as the target NFC application. The NFC interface represents an interface related to an NFC service, for example, an interface for displaying existing information that is about the NFC object and that is included in the foreground application.

In another implementation, after sensing the NFC object, the mobile phone displays an interface of an NFC application that matches the NFC object. The NFC application that matches the NFC object herein indicates an NFC application that includes related information about the NFC object (for example, an identifier of the NFC object and a type of the NFC object). For example, the NFC object is a bus card. After the mobile phone senses the NFC object, the wallet application in the mobile phone determines that the wallet application in the mobile phone includes information about the bus card, and displays an interface including the information about the bus card. Certainly, the wallet application in the mobile phone may further perform another operation, for example, reading data from or writing data into the bus card. Herein, the wallet application is the target NFC application.

It should be further noted that if there is one NFC application in the mobile phone, after the mobile phone senses the NFC object, the NFC application may be directly considered as the target NFC application by default.

S303: The mobile phone generates N NFC interrupt signals in a second time period. The second time period is later than the first time period.

S304: The mobile phone performs M times of interrupt processing for the N NFC interrupt signals generated in the second time period. The quantity N of NFC interrupt signals generated in the first time period is greater than a first preset threshold, and M is less than N.

It should be noted that optionally, before step S304, the mobile phone may determine whether the value of the mark 1 is the first preset identifier. If the value of the mark 1 is the first preset identifier, the mobile phone may start the interrupt interception mechanism, and filter the NFC interrupt signal generated in the second time period. If the value of the mark 1 is the second preset identifier, the mobile phone may not filter the NFC interrupt signal in the second time period.

It should be further noted that the value of the mark 1 is set based on a quantity of NFC interrupt signals in a previous period (or described as "a time period").

Alternatively, the mobile phone may determine whether the quantity of NFC interrupt signals generated in the first time period is greater than the first preset threshold. When the quantity of NFC interrupt signals generated in the first time period is greater than the first preset threshold, the mobile phone may set the mark 1 to the first preset identifier. When the quantity of NFC interrupt signals generated in the first time period is less than the first preset threshold, the mark 1 is set to the second preset identifier. In this embodiment, because the quantity (that is, N) of NFC interrupt signals generated in the first time period is greater than the first preset threshold, the mobile phone may start the interrupt interception mechanism, for example, perform S304.

In another implementation, the mobile phone may determine whether the quantity of NFC interrupt signals generated in the first time period is greater than the first preset threshold. When the quantity of NFC interrupt signals generated in the first time period is greater than the first preset threshold, the mobile phone starts the interrupt interception mechanism.

When the quantity of NFC interrupt signals generated in the first time period is less than the first preset threshold, it indicates that the mobile phone generates a relatively small quantity of NFC interrupt signals, and the mobile phone does not need to start the interrupt interception mechanism, that is, the mobile phone may process all of the NFC interrupt signals generated by the mobile phone in the second time period.

When the quantity of NFC interrupt signals generated by the mobile phone in the first time period is less than the first preset threshold, a process in which the mobile phone processes the NFC interrupt signal generated by the mobile phone in the second time period is similar to a process in which the mobile phone processes the NFC interrupt signal generated by the mobile phone in the first time period. For example, each time the mobile phone generates an NFC interrupt signal, one time of interrupt processing may be performed based on the NFC interrupt signal.

It should be understood that when the quantity (that is, N) of NFC interrupt signals generated in the first time period is equal to the first preset threshold, the mobile phone may process, based on a process for the case in which the quantity of NFC interrupt signals generated in the first time period is greater than the first preset threshold, the NFC interrupt signal generated in the second time period, or the mobile phone may process, based on a process for the case in which the quantity of NFC interrupt signals generated in the first time period is less than the first preset threshold, the NFC interrupt signal generated in the second time period. This is not limited in this application.

For example, M represents a filtering threshold of the NFC interrupt signal, that is, a quantity of NFC interrupt signals that do not need to be intercepted. M may be 1, or M may be another value, provided that M is less than N. Because M is less than N, for the interrupt signal generated in the second time period, a quantity of times of interrupt processing is reduced compared with that in the first time period, greatly reducing power consumption of the mobile phone.

For example, after the first time period elapses, if the mobile phone continues to sense the NFC object, the mobile phone may continue to generate the NFC interrupt signal, and may count the NFC interrupt signal generated in the second time period, so that when an end time of the second time period arrives, the mobile phone may obtain a quantity of NFC interrupt signals generated by the mobile phone in the second time period.

When the quantity (that is, N) of NFC interrupt signals generated in the first time period is greater than the first preset threshold, it indicates that the mobile phone generates a large quantity of NFC interrupt signals, and the mobile phone may start the interrupt interception mechanism, that is, the mobile phone may process only some (that is, M) of the NFC interrupt signals generated in the second time period. For each NFC interrupt signal in the M NFC interrupt signals, the mobile phone may perform interrupt processing corresponding to the NFC interrupt signal.

Optionally, a start time of the second time period may be an end time of the first time period. Duration of the second time period may be the same as or different from duration of the first time period. This is not limited in this application. Certainly, the start time of the second time period may alternatively be a time after the end time of the first time period. This is not limited in this application.

It may be understood that because a time interval between two adjacent time periods (for example, the first time period and the second time period) is relatively short, when the quantity of NFC interrupt signals generated in the first time period is greater than the first preset threshold, indicating that the mobile phone generates a large quantity of NFC interrupt signals in the first time period, it may be considered that the mobile phone still generates a large quantity of NFC interrupt signals in the second time period. Therefore, the mobile phone may intercept the NFC interrupt signal in the second time period, that is, the mobile phone may process some of the NFC interrupt signals generated in the second time period.

A process in which the mobile phone processes some of the NFC interrupt signals generated in the second time period may be described by using the following several examples.

In an example, the mobile phone may accumulate the NFC interrupt signals generated in the second time period. When the end time of the second time period arrives, the mobile phone may first select the M NFC interrupt signals from the accumulated NFC interrupt signals generated in the second time period. Then, the mobile phone may separately perform interrupt processing corresponding to the M NFC interrupt signals. For example, the mobile phone may randomly select the M NFC interrupt signals from the accumulated NFC interrupt signals generated in the second time period. For another example, the mobile phone may select, based on a preset location, the M NFC interrupt signals from the accumulated NFC interrupt signals generated in the second time period. For example, the preset location is an end location, and M is 1. Correspondingly, the selected NFC interrupt signal may be an NFC interrupt signal last generated by the mobile phone in the second time period.

In another example, in the second time period, each time an NFC interrupt signal is generated, the mobile phone may process the NFC interrupt signal, and stop processing the generated NFC interrupt signal after processing M NFC interrupt signals. For example, if M is 1, the mobile phone may perform corresponding interrupt processing based on a first NFC interrupt signal generated by the mobile phone in the second time period, and the mobile phone may not process another NFC interrupt signal generated by the mobile phone in the second time period, that is, may discard the another NFC interrupt signal.

In some embodiments, when the quantity of NFC interrupt signals generated in the first time period is greater than the first preset threshold, the mobile phone may discard all of the NFC interrupt signals generated in the second time period, to greatly reduce an amount of power consumed by the mobile phone. However, a related NFC service possibly cannot be successfully processed. For example, the user may fail to swipe a card by using the mobile phone.

It should be noted that the quantity N of NFC interrupt signals generated in the second time period is merely an example, and the quantity of NFC interrupt signals generated by the mobile phone in the second time period may not be N. In other words, the quantity of NFC interrupt signals generated by the mobile phone in the second time period may be the same as or different from the quantity of NFC interrupt signals generated in the first time period.

The foregoing describes a case in which the NFC interrupt signal generated by the mobile phone in the second time period is caused because the NFC object is close to the mobile phone. The NFC interrupt signal generated by the mobile phone in the second time period may alternatively be generated because an NFC component in the mobile phone continues to work after the NFC product stops being close to the mobile phone. For example, after the mobile phone is used as a virtual NFC object, because there is still a voltage/current in an NFC coil in the mobile phone, the NFC component in the mobile phone may continue to work for a period of time (for example, a few minutes), that is, the NFC interrupt signal may continue to be generated.

In an embodiment, the mobile phone counts the quantity of NFC interrupt signals generated by the mobile phone in the first time period. When the quantity (that is, N) is greater than the first preset threshold, it indicates that the mobile phone generates a large quantity of NFC interrupt signals, and the mobile phone may set the mark 1 to the first preset identifier. The mark 1 may be used to indicate whether the mobile phone starts the interrupt interception mechanism. The first preset identifier may be used to indicate the mobile phone to start the interrupt interception mechanism. When the quantity (that is, N) is less than the first preset threshold, the mobile phone may set the mark 1 to the second preset identifier. The second preset identifier may be used to indicate the mobile phone not to start the interrupt interception mechanism. The mobile phone may determine, by determining a specific value of the mark 1, whether to filter a signal in a next time period of the first time period.

For example, after the mobile phone generates the NFC interrupt signal, the mobile phone may first determine the value of the mark 1. When the value of the mark 1 is the first preset identifier, it indicates that the NFC interrupt signal needs to be filtered based on the interrupt interception mechanism. A time period in which the NFC interrupt signal is located may be the second time period. When the value of the mark 1 is the second preset identifier, it indicates that the mobile phone generates a relatively small quantity of NFC interrupt signals, and the mobile phone does not need to filter the NFC interrupt signal, and may process all of NFC interrupt signals in a time period in which the NFC interrupt signal is located, to avoid unnecessary filtering of the NFC interrupt signal.

In another embodiment, the mobile phone counts the quantity of NFC interrupt signals generated by the mobile phone in the first time period. When the quantity (that is, N) of NFC interrupt signals generated in the first time period is greater than the first preset threshold, it indicates that the mobile phone generates a large quantity of NFC interrupt signals, and the mobile phone may set the mark 2 (that is, a second mark). The mark 2 may be used to indicate the mobile phone to start the interrupt interception mechanism, that is, to filter the NFC interrupt signal. When the quantity of NFC interrupt signals generated in the first time period is less than the first preset threshold, it indicates that the mobile phone does not generate a large quantity of NFC interrupt signals, and the mobile phone may not set the mark 2 (that is, may clear the mark 2). The mobile phone may determine, by determining whether the mark 2 is present, whether to filter a signal in a next time period of the first time period.

Specific values of the mark 1, the second preset identifier, and the first preset identifier may be set based on an actual requirement. This is not limited in this application.

In some embodiments, after sensing the NFC object, the mobile phone counts, in each preset period, a quantity of NFC interrupt signals generated in the preset period, so that when a next preset period arrives, the mobile phone may determine, by using a quantity of NFC interrupt signals generated in a previous preset period of the next preset period, whether to filter an NFC interrupt signal generated in the next preset period. For example, a time at which the mobile phone obtains a first NFC interrupt signal may be considered as a start time of a first preset period. A second preset period starts when the first preset period ends. A third preset period starts when the second preset period ends. The mobile phone may count, by using a counter, the NFC interrupt signal generated in each preset period, to obtain the quantity of NFC interrupt signals generated in each preset period.

Optionally, the counter in the mobile phone is periodically reset. When a preset period starts, the counter in the mobile phone starts counting. When the preset period ends, the counter is reset. Alternatively, the counter in the mobile phone is not periodically reset, and a value of the counter is an accumulated quantity of generated NFC interrupt signals. When the mobile phone obtains the first NFC interrupt signal, a preset period in which the first NFC interrupt signal is located is the first preset period, and the counter in the mobile phone starts counting. When the preset period elapses, that is, when the second preset period arrives, the counter in the mobile phone continues to perform counting. Correspondingly, when determining whether a quantity of NFC interrupt signals generated in the second preset period is greater than the first preset threshold, the mobile phone actually determines whether the value of the counter is greater than a sum of the first preset threshold and the NFC interrupt signal generated in the first preset period.

In this embodiment of this application, considering general use of the NFC function of the mobile phone by the user, when the mobile phone is used as a passive NFC product, for example, when the user uses the virtual bus card on the mobile phone for swiping, a corresponding NFC service may be implemented if interrupt processing corresponding to one NFC interrupt signal is completed. Therefore, after it is determined that the mobile phone generates a large quantity of NFC interrupt signals, the mobile phone may start the interrupt interception mechanism, that is, for the NFC interrupt signals generated in the second time period, the mobile phone may process only some (for example, one) of the NFC interrupt signals, and does not need to process all of the NFC interrupt signals generated in the second time period. In this way, while it is ensured that the user normally uses the NFC function of the mobile phone, that is, while an NFC service is successfully implemented, an amount of power consumed by the mobile phone can be reduced, and a heating problem in the mobile phone can be avoided. In addition, standby duration of the mobile phone can be prolonged, thereby improving user experience.

In this embodiment of this application, when the mobile phone is used as a passive NFC product, the user may reuse a related virtual NFC object on the mobile phone. For example, when the mobile phone is used as a virtual access card, and when the mobile phone is placed on an access card reader for one time, access control may fail to be lifted. Therefore, the user may attempt to place the mobile phone on the access card reader for a plurality of times, or the user may place the mobile phone on the access card reader for a long time, to lift access control. Correspondingly, the NFC interrupt signal generated in the second time period may be caused by the mobile phone based on reuse of the virtual NFC object on the mobile phone by the user. Therefore, when it is determined that the mobile phone generates a large quantity of NFC interrupt signals, the mobile phone processes some of the NFC interrupt signals generated in the second time period instead of discarding all of the NFC interrupt signals, so that an NFC device (for example, the access card reader) corresponding to the virtual NFC object can successfully read related information about the virtual NFC object, to successfully process a related NFC service.

In some embodiments, when the mobile phone is used as a passive NFC product, after the mobile phone stops being close to another NFC device, an NFC component in the mobile phone still continues to work for a period of time, that is, the NFC interrupt signal still continues to be generated. Correspondingly, the NFC interrupt signal generated in the second time period may be caused because the NFC component in the mobile phone continues to work. Therefore, when it is determined that the mobile phone generates a large quantity of NFC interrupt signals, the mobile phone processes some of the NFC interrupt signals generated in the second time period instead of discarding all of the NFC interrupt signals, so that the mobile phone can continue to communicate with the another NFC device, to avoid a case in which some information in the mobile phone or the another NFC device is not read by the other party, so as to ensure a success rate of implementing an NFC service and effectively improve user satisfaction.

In some embodiments, to stop an NFC interrupt storm from occurring in the mobile phone, when the quantity (that is, N) of NFC interrupt signals generated by the mobile phone in the first time period is greater than the first preset threshold, indicating that the mobile phone generates a large quantity of NFC interrupt signals, first prompt information may be displayed on the screen of the mobile phone. The first prompt information is used to prompt the user that an abnormal NFC product touches the mobile phone, and advise the user not to place the mobile phone and the NFC product together.

Optionally, when the quantity of NFC interrupt signals generated in the first time period is greater than the first preset threshold, if the screen of the mobile phone is turned on, the mobile phone may display the first prompt information. Alternatively, if the screen of the mobile phone is turned off, the mobile phone may not display the first prompt information, and display the first prompt information after the screen of the mobile phone is turned on, to avoid a case in which the user cannot view the second prompt information because the mobile phone is in the screen-off state and consequently unnecessary display is caused, so as to avoid a waste of resources. For example, to avoid a case in which the user cannot view the first prompt information in a timely manner because the mobile phone is in the screen-off state (for example, the mobile phone is in the standby state), when the quantity of NFC interrupt signals generated in the first time period is greater than the first preset threshold, and when the screen of the mobile phone is turned off, the mobile phone may not display the first prompt information. When the screen of the mobile phone is turned on, the mobile phone may display the first prompt information, so that the user can view the first prompt information in a timely manner, and unnecessary display can be avoided.

Alternatively, when the quantity of NFC interrupt signals generated in the first time period is greater than the first preset threshold, if the screen of the mobile phone is turned off, the screen is turned on and the first prompt information is displayed.

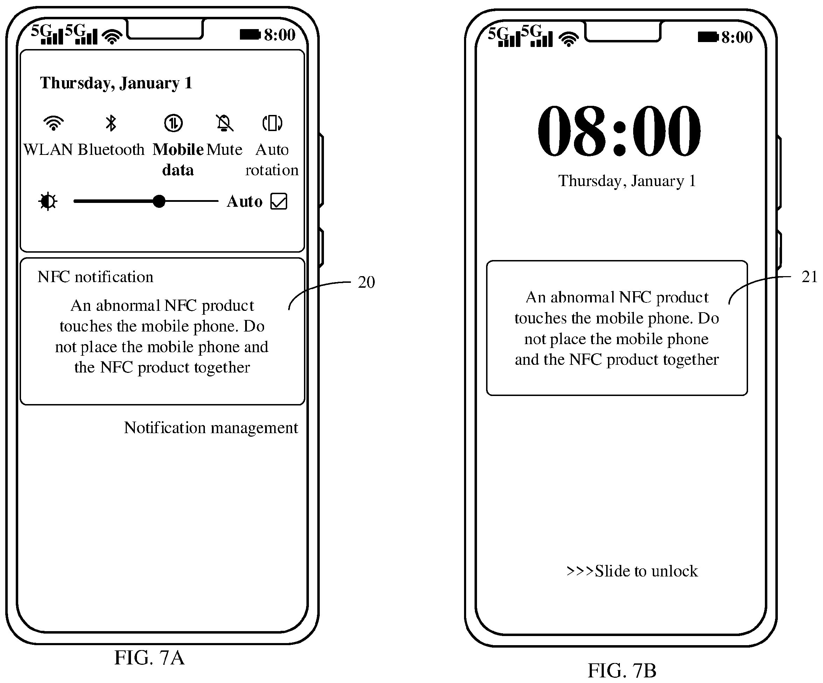

The first prompt information may be displayed in a form of a pop-up box. For example, the mobile phone may display the first prompt information (for example, first prompt information 20 shown in FIG. 7A) in the form of a pop-up box in a notification bar. For another example, the mobile phone may display the first prompt information in the form of a pop-up box in an interface displayed on the mobile phone (for example, as shown in FIG. 7B, the mobile phone displays first prompt information 21 in a lock screen interface).

In some embodiments, considering that when the user uses the NFC function of the mobile phone, the mobile phone is used by the user as a virtual NFC object, and the mobile phone is usually a passive NFC product, to ensure a success rate of using the NFC function of the mobile phone by the user, that is, to ensure a success rate of implementing a related NFC service, after generating the NFC interrupt signal, the mobile phone may first determine whether the NFC interrupt signal generated by the mobile phone is a first-type signal. The first-type signal represents an NFC interrupt signal generated when the mobile phone is used as a virtual NFC object.

When it is determined that the NFC interrupt signal generated by the mobile phone is a first-type signal, it indicates that the mobile phone may be used by the user as a virtual NFC object. Therefore, to ensure successful implementation of a related NFC service, the mobile phone may directly process the NFC interrupt signal without filtering the NFC interrupt signal, and may initialize the counter. Optionally, the mobile phone may process all of NFC interrupt signals that have been generated in a time period in which the NFC interrupt signal is located.

When it is determined that the NFC interrupt signal generated by the mobile phone is not a first-type signal, it indicates that the mobile phone may not be used by the user as a virtual NFC object, that is, it indicates that the NFC interrupt signal is not generated when the mobile phone is used as a virtual NFC object. Therefore, the mobile phone may process, by using the NFC interrupt signal processing solution disclosed in this application, the NFC interrupt signal (for example, the NFC interrupt signal generated in the first time period or the second time period) generated by the mobile phone.

In some embodiments, when determining whether the NFC interrupt signal generated by the mobile phone is a first-type signal, the mobile phone may obtain first information about the mobile phone. The first information is used to determine whether the NFC interrupt signal is a first-type signal. When the first information meets the following first preset condition, it indicates that the NFC interrupt signal is a first-type signal, and the mobile phone may not filter the NFC interrupt signal, and may initialize the counter. When the first information does not meet the following first preset condition, it indicates that the NFC interrupt signal is not a first-type signal, and the mobile phone may process, by using the NFC interrupt signal processing solution disclosed in this application, the NFC interrupt signal generated by the mobile phone, for example, determine whether the NFC interrupt signal needs to be filtered and counted.

For example, the first information may include at least one of a screen status of the mobile phone, an identifier of the foreground application of the mobile phone, and a mode of the NFC component in the mobile phone. Correspondingly, the first preset condition may include at least one of the following: The screen status of the mobile phone is a screen-on state, the identifier of the foreground application of the mobile phone is an identifier of an NFC application, and the NFC component in the mobile phone is in a write mode. A type of information included in the first information corresponds to a type of a condition included in the first preset condition.

In an example, the first information may include the screen status of the mobile phone. The first preset condition may include that the screen status of the mobile phone is the screen-on state. When the screen status of the mobile phone is the screen-off state, it indicates that the user is not currently using the NFC function of the mobile phone, and the mobile phone may determine that the first information about the mobile phone does not meet the first preset condition.

When the screen status of the mobile phone is the screen-on state, it indicates that the user may be using the NFC function of the mobile phone, and the mobile phone may determine that the first information about the mobile phone meets the first preset condition.

In another example, the first information may include the identifier of the foreground application of the mobile phone. Correspondingly, the first preset condition may include that the identifier of the foreground application of the mobile phone is an identifier of an NFC application. When the identifier of the foreground application of the mobile phone is not an identifier of an NFC application, it indicates that the user is not currently using the NFC application in the mobile phone, that is, it indicates that the user is not currently using the NFC function of the mobile phone, and the mobile phone may determine that the first information about the mobile phone does not meet the first preset condition.

When the identifier of the foreground application of the mobile phone is an identifier of an NFC application, it indicates that the user is not currently using the NFC function of the mobile phone, and it indicates that the user may be currently using the NFC function of the mobile phone, that is, it indicates that the user may be currently using the NFC function of the mobile phone, and the mobile phone may determine that the first information about the mobile phone meets the first preset condition.

In another example, the first information may include the mode of the NFC component in the mobile phone. When the mode of the NFC component in the mobile phone is the write mode, it indicates that the mobile phone may be currently replicating data of the NFC object, for example, the mobile phone may be used as a card swipe machine in this case, and the mobile phone may determine that the first information about the mobile phone meets the first preset condition.

When the mode of the NFC component in the mobile phone is not the write mode, the mobile phone may determine that the first information about the mobile phone does not meet the first preset condition.

It may be understood that a related NFC application process of the mobile phone reads information about the NFC object (for example, a bus card) through the NFC component. In this case, the NFC component is in the write mode.

The mobile phone may determine the mode of the NFC component by obtaining an NFC chip and/or an NFC antenna in the NFC component. A mode of the NFC chip is consistent with a mode of the NFC antenna. When determining that the NFC chip and/or the NFC antenna in the NFC component are/is in the write mode, the mobile phone may determine that the mode of the NFC component in the mobile phone is the write mode.

In another example, the first information may include the screen status and the identifier of the foreground application of the mobile phone. When the screen status is the screen-off state or the foreground application is not an NFC application in the mobile phone, it indicates that the user is not currently using the NFC function of the mobile phone, and the mobile phone may determine that the first information about the mobile phone does not meet the first preset condition.

When the screen status is the screen-on state and the identifier of the foreground application is an identifier of an NFC application in the mobile phone, it indicates that the user may be currently using the NFC function of the mobile phone, and the mobile phone may determine that the first information about the mobile phone meets the first preset condition.

In another example, the first information may include the screen status of the mobile phone and the mode of the NFC component in the mobile phone. Correspondingly, the first preset condition may include that the screen status is the screen-on state and the mode of the NFC component is the write mode. When the screen status of the mobile phone is the screen-off state or the mode of the NFC component in the mobile phone is not the write mode, the mobile phone may determine that the first information does not meet the first preset condition.

When the screen status of the mobile phone in the first information is the screen-on state and the mode of the NFC component is the write mode, the mobile phone may determine that the first information meets the first preset condition.

In another example, the first information may include the identifier of the foreground application of the mobile phone and the mode of the NFC component in the mobile phone. Correspondingly, the first preset condition may include that the identifier of the foreground application is an identifier of an NFC application and the mode of the NFC component is the write mode. When the identifier of the foreground application in the first information is not an identifier of an NFC application or the mode of the NFC component in the mobile phone is not the write mode, the mobile phone may determine that the first information does not meet the first preset condition.

When the identifier of the foreground application in the first information is an identifier of an NFC application and the mode of the NFC component is the write mode, the mobile phone may determine that the first information meets the first preset condition.

In another example, the first information may include the screen status of the mobile phone, the identifier of the foreground application of the mobile phone, and the mode of the NFC component in the mobile phone. Correspondingly, the first preset condition may include that the screen status is the screen-on state, the identifier of the foreground application is an identifier of an NFC application, and the mode of the NFC component is the write mode. When the screen status of the mobile phone in the first information is the screen-off state, the identifier of the foreground application is not an identifier of an NFC application, or the mode of the NFC component in the mobile phone is not the write mode, the mobile phone may determine that the first information does not meet the first preset condition (or described as "the mobile phone does not meet the first preset condition").

When the screen status of the mobile phone in the first information is the screen-on state, the identifier of the foreground application is an identifier of an NFC application, and the mode of the NFC component is the write mode, the mobile phone may determine that the first information meets the first preset condition (or described as "the mobile phone meets the first preset condition").

In some embodiments, when the mobile phone determines whether an NFC interrupt generated in a time period (for example, the first time period or the second time period) is a first-type signal, the mobile phone may perform determining when obtaining a first or each NFC interrupt signal in the time period, or may periodically perform determining. This is not limited in this application. For example, after generating an NFC interrupt signal, the mobile phone determines whether the NFC interrupt signal is a first-type signal. If the NFC interrupt signal is not a first-type signal, the mobile phone may continue to process the NFC interrupt signal by using the NFC interrupt processing solution disclosed in this application (for example, if a time period to which the NFC interrupt signal belongs is the second time period, the mobile phone may filter the NFC interrupt signal based on the interrupt interception mechanism). If the NFC interrupt signal is a first-type signal, the mobile phone may perform interrupt processing based on the NFC interrupt signal without filtering the NFC interrupt signal, and initialize the counter. For another example, after obtaining a first NFC interrupt signal in a time period, the mobile phone determines whether the first NFC interrupt signal is a first-type signal. If the first NFC interrupt signal is not a first-type signal, the mobile phone may process, by using the NFC interrupt processing solution disclosed in this application, all of NFC interrupt signals generated in the time period. If the first NFC interrupt signal is a first-type signal, the mobile phone may process the first NFC interrupt signal (that is, perform interrupt processing based on the first NFC interrupt signal), and initialize the counter.

In some embodiments, when determining that the first information does not meet the first preset condition, the mobile phone may set a mark 3 (that is, a third mark). The mark 3 is used to indicate that the first information does not meet the first preset condition (or described as "the mobile phone does not meet the first preset condition"). After obtaining the NFC interrupt signal, the mobile phone detects whether the mark 3 is present. When the mark 3 is detected, it indicates that the NFC interrupt signal is not generated when the mobile phone is used as a virtual NFC object, and the mobile phone may process the NFC interrupt signal by using the NFC interrupt signal processing solution disclosed in this application.

When the mark 3 is not detected, it indicates that the NFC interrupt signal is a first-type signal, and the mobile phone may perform interrupt processing based on the NFC interrupt signal, may initialize the counter, and the like, to re-enter the first time period when a new NFC interrupt signal is obtained. In this embodiment, optionally, after initializing the counter, the mobile phone may clear the mark 2 or set the value of the mark 1 to the second preset identifier.

In some other embodiments, when determining that the first information does not meet the first preset condition, the mobile phone may update a mark 4 to a third preset identifier, or when determining that the first information meets the first preset condition (or described as "the mobile phone meets the first preset condition"), the mobile phone may update a mark 4 to a fourth preset identifier. The mark 4 may be used to indicate whether the first information meets the first preset condition. The third preset identifier is used to indicate that the first information does not meet the first preset condition, that is, indicate that the NFC interrupt signal generated by the mobile phone is not a first-type signal. The fourth preset identifier is used to indicate that the first information meets the first preset condition, that is, indicate that the NFC interrupt signal generated by the mobile phone is a first-type signal.

After the mobile phone obtains the NFC interrupt signal, when it is detected that the mark 4 is the third preset identifier, it indicates that the NFC interrupt signal is not a first-type signal, and the mobile phone may process the NFC interrupt signal by using the NFC interrupt signal processing solution disclosed in this application, for example, continue to perform counting. When it is detected that the mark 4 is the fourth preset identifier, it indicates that the NFC interrupt signal is a first-type signal, and the mobile phone may perform interrupt processing based on the NFC interrupt signal, may initialize the counter, and the like, to re-enter the first time period when a new NFC interrupt signal is obtained. The new NFC interrupt signal may be a first NFC interrupt signal in the first time period. Optionally, after initializing the counter, the mobile phone may clear the mark 1 or set the value of the mark 2 to the second preset identifier.

In this application, to improve accuracy of determining whether the NFC interrupt signal generated by the mobile phone is a first-type signal, the mobile phone may perform determining based on the screen status of the mobile phone, the identifier of the foreground application, and the mode of the NFC component. To improve efficiency of determining whether the NFC interrupt signal generated by the mobile phone is a first-type signal, the mobile phone may perform determining based on the screen status of the mobile phone, the identifier of the foreground application, or the mode of the NFC component. To improve accuracy and efficiency of determining whether the NFC interrupt signal generated by the mobile phone is a first-type signal, the mobile phone may perform determining based on two pieces of information in the screen status of the mobile phone, the identifier of the foreground application, or the mode of the NFC component. Certainly, the condition included in the first preset condition may be set based on an actual requirement.

Generally, because duration of a time period (for example, the second time period or the first time period) is relatively short, NFC interrupt signals generated by the mobile phone in the time period are usually the same, that is, duplicate. Therefore, in the second time period, the mobile phone may process only some NFC interrupt signals in the NFC interrupt signals generated by the mobile phone in the second time period, to reduce power consumption of the mobile phone and meet a requirement of the user for using the function of the mobile phone. However, there is still a possibility that an NFC interrupt signal generated by the mobile phone in a time period is different from another NFC interrupt signal in the time period. For example, there are two NFC cards and the mobile phone in a pocket of the user, and the mobile phone sequentially touches the two NFC cards. In a time period (for example, the second time period), after generating an NFC interrupt signal, the mobile phone determines whether the generated NFC interrupt signal is the same as a previous generated NFC interrupt signal. If the generated NFC interrupt signal is the same as the previous generated NFC interrupt signal, it indicates that the mobile phone generates a duplicate NFC interrupt signal, and the mobile phone may continue to process, by using the NFC interrupt signal processing solution disclosed in this application, an NFC interrupt signal generated in the time period. For example, the mobile phone may continue to perform counting once by using the counter.

Otherwise, the mobile phone may perform interrupt processing based on the NFC interrupt signal, for example, perform interrupt processing on the NFC interrupt signal, or perform interrupt processing on an NFC interrupt signal in the time period in which the NFC interrupt signal is located. Optionally, the mobile phone may initialize the counter. For a next generated NFC interrupt signal, the mobile phone may start counting again, for example, perform S301 and subsequent steps again.

That two NFC interrupt signals are different may indicate that the two NFC interrupt signals respectively correspond to different NFC products, for example, identifiers and types of the NFC products are different.

In some embodiments, when the NFC interrupt signal generated by the mobile phone is different from the previous generated NFC interrupt signal, the mobile phone may set the value of the mark 1 to the second preset identifier or clear the mark 2.

In some embodiments, after an NFC interrupt signal is generated in the second time period, if a time difference between a timestamp corresponding to the NFC interrupt signal and a timestamp corresponding to a previous generated NFC interrupt signal is greater than a preset time, it indicates that there is a decrease in a quantity of NFC interrupts, and the mobile phone may exit the interrupt interception mechanism, and perform interrupt processing based on the NFC interrupt signal, for example, perform interrupt processing on the NFC interrupt signal, or may process all of NFC interrupt signals that have been generated in the second time period. The timestamp corresponding to the NFC interrupt signal may indicate a generation time of the NFC interrupt signal, or the timestamp corresponding to the NFC interrupt signal may indicate a collection time of the NFC interrupt signal, for example, a time at which the mobile phone (or a Linux kernel in the mobile phone) obtains an NFC interrupt signal generated by the NFC component in the mobile phone.

For example, after the mobile phone exits the interrupt interception mechanism, the mobile phone may initialize the counter. For example, if an initial value of the counter is 0, the mobile phone may initialize the counter to 0. When the NFC object is sensed, counting may be started again, for example, the first time period may be re-entered. In this embodiment, optionally, the mobile phone may further set the value of the mark 1 to the second preset identifier or clear the mark 2.

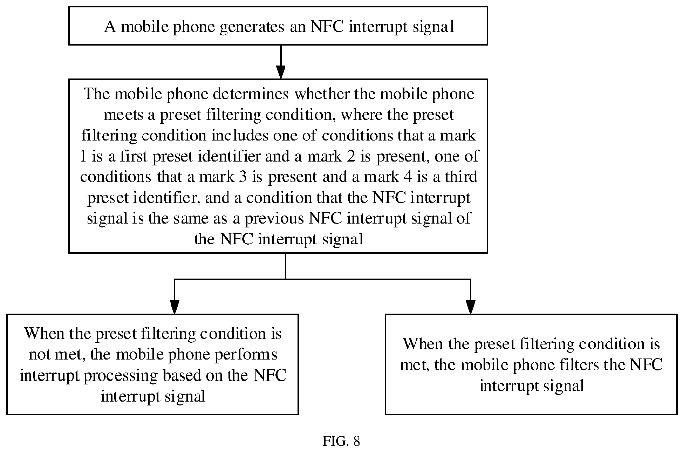

In some embodiments, as shown in FIG. 8, the mobile phone generates an NFC interrupt signal. Then, the mobile phone determines whether the mobile phone meets a preset filtering condition. The preset filtering condition may include one of conditions that the mark 1 is the first preset identifier and the mark 2 is present, one of conditions that the mark 3 is present and the mark 4 is the third preset identifier, and a condition that the NFC interrupt signal is the same as a previous NFC interrupt signal of the NFC interrupt signal.

When the preset filtering condition is met, the mobile phone may filter the NFC interrupt signal based on the interrupt interception mechanism. When the preset filtering condition is not met, the mobile phone may not filter the NFC interrupt signal, but directly perform interrupt processing based on the NFC interrupt signal.

Because the NFC interrupt signal generated in the first time period does not meet the preset filtering condition, the mobile phone may perform S302. Because the NFC interrupt signal generated in the second time period meets the preset filtering condition, the mobile phone may perform S304.

S305: The mobile phone generates L NFC interrupt signals in a third time period. The third time period is later than the second time period.

S306: Perform M times of interrupt processing for the L NFC interrupt signals generated in the third time period. The quantity N of NFC interrupt signals generated in the second time period is greater than the first preset threshold, and M is less than L.

It should be noted that optionally, before step S306, the mobile phone may determine whether the value of the mark 1 is the first preset identifier. If the value of the mark 1 is the first preset identifier, the mobile phone may start the interrupt interception mechanism, and filter the NFC interrupt signal generated in the third time period. If the value of the mark 1 is the second preset identifier, the mobile phone may not filter the NFC interrupt signal in the third time period.

Alternatively, the mobile phone may determine whether the quantity of NFC interrupt signals generated in the second time period is greater than the first preset threshold. When the quantity of NFC interrupt signals generated in the second time period is greater than the first preset threshold, the mobile phone may start the interrupt interception mechanism. In this embodiment, because the quantity (that is, N) of NFC interrupt signals generated in the second time period is greater than the first preset threshold, the mobile phone may start the interrupt interception mechanism, for example, perform S306.

When the quantity of NFC interrupt signals generated in the second time period is less than the first preset threshold, it indicates that the mobile phone generates a relatively small quantity of NFC interrupt signals, and the mobile phone does not need to start the interrupt interception mechanism, that is, the mobile phone may process all of the NFC interrupt signals generated by the mobile phone in the third time period.

For example, a cause for generation of the NFC interrupt signal in the third time period may be similar to the cause for generation of the NFC interrupt signal in the second time period. For example, the NFC interrupt signal generated by the mobile phone in the third time period is generated because the mobile phone senses the NFC object. For another example, the NFC interrupt signal generated by the mobile phone in the third time period is generated because the NFC component in the mobile phone continues to work after the mobile phone cannot sense the NFC object.

In this embodiment of this application, when the quantity (that is, N) of NFC interrupt signals generated in the second time period is greater than the first preset threshold, it indicates that the mobile phone generates a relatively large quantity of NFC interrupt signals, and the mobile phone may start the interrupt interception mechanism, that is, may process some of the NFC interrupt signals generated in the third time period.

A process in which the mobile phone processes the NFC interrupt signal generated in the third time period is similar to the process in which the mobile phone processes the NFC interrupt signal generated in the second time period. Details are not described herein again.

For example, a start time of the third time period may be the end time of the second time period. Duration of the third time period may be the same as or different from the duration of the second time period. This is not limited in this application. Certainly, the start time of the third time period may alternatively be a time after the end time of the second time period. This is not limited in this application.

It should be understood that an operation performed by the mobile phone in the third time period is similar to an operation performed by the mobile phone in the second time period. For example, each time an NFC interrupt signal is obtained or after a first NFC interrupt signal is obtained, the mobile phone may determine whether the value of the mark 1 is the first preset identifier. The first preset identifier indicates that a quantity of NFC interrupt signals generated in a previous time period of a current time period is greater than the first preset threshold. For example, the current time period may be the third time period, and the previous time period may be the second time period.

It should be noted that the quantity L of NFC interrupt signals generated in the third time period is merely an example, and the quantity of NFC interrupt signals generated by the mobile phone in the third time period may not be L. The foregoing steps S305-S306 are optional steps. For example, if the mobile phone stops generating the NFC interrupt signal after the foregoing time period (for example, the second time period) elapses, the mobile phone does not need to perform S305-S306. Correspondingly, steps after S306 do not need to be performed.

S307: The mobile phone generates N NFC interrupt signals in a fourth time period. The fourth time period is later than the third time period.

S308: The mobile phone performs N times of interrupt processing for the N NFC interrupt signals generated in the fourth time period. The quantity L of NFC interrupt signals generated in the third time period is less than the first preset threshold.

It should be noted that optionally, before step S308, the mobile phone may determine whether the value of the mark 1 is the first preset identifier. If the value of the mark 1 is the first preset identifier, it indicates that the quantity of NFC interrupt signals generated in the third time period is greater than the first preset threshold, and the mobile phone may start the interrupt interception mechanism, and filter the NFC interrupt signal generated in the fourth time period. If the value of the mark 1 is the second preset identifier, it indicates that the quantity of NFC interrupt signals generated in the third time period is less than the first preset threshold, and the mobile phone may not filter the NFC interrupt signal in the fourth time period.

Alternatively, the mobile phone may determine whether the quantity of NFC interrupt signals generated in the third time period is greater than the first preset threshold. When the quantity of NFC interrupt signals generated in the third time period is greater than the first preset threshold, the mobile phone may start the interrupt interception mechanism. When the quantity of NFC interrupt signals generated in the third time period is less than the first preset threshold, it indicates that the mobile phone generates a relatively small quantity of NFC interrupt signals, and the mobile phone does not need to start the interrupt interception mechanism, that is, the mobile phone may process all of the NFC interrupt signals generated by the mobile phone in the fourth time period. In this embodiment, because the quantity (that is, L) of NFC interrupt signals generated in the third time period is less than the first preset threshold, the mobile phone may not need to start the interrupt interception mechanism, for example, may perform S308.

For example, a start time of the fourth time period may be an end time of the third time period. Duration of the fourth time period may be the same as or different from the duration of the third time period. This is not limited in this application. Certainly, the start time of the fourth time period may alternatively be a time after the end time of the third time period. This is not limited in this application.

A cause for generation of the NFC interrupt signal in the fourth time period may be similar to the cause for generation of the NFC interrupt signal in the foregoing time period (for example, the third time period or the second time period). Details of the cause are not described herein again.

In this embodiment of this application, when the quantity (that is, L) of NFC interrupt signals generated in the third time period is less than the first preset threshold, it indicates that the mobile phone generates a relatively small quantity of NFC interrupt signals, that is, it indicates that the mobile phone stops frequently generating the NFC interrupt signal, and the mobile phone may process all of the NFC interrupt signals generated in the fourth time period.

A process in which the mobile phone processes the NFC interrupt signal generated in the fourth time period is similar to the process in which the mobile phone processes the NFC interrupt signal generated in the first time period. Details are not described herein again.

It should be understood that the quantity N of NFC interrupt signals generated in the fourth time period is merely an example, and the quantity of NFC interrupt signals generated by the mobile phone in the fourth time period may not be N. The foregoing steps S307-S308 are optional steps. For example, if the mobile phone stops generating the NFC interrupt signal after the foregoing time period (for example, the third time period or the second time period) elapses, the mobile phone does not need to perform S307-S308. Correspondingly, steps after S308 do not need to be performed.

In this embodiment of this application, when the quantity of NFC interrupt signals generated by the mobile phone in the third time period is less than the first preset threshold, the mobile phone stops generating a large quantity of NFC interrupt signals, and the user may start to normally use the NFC function of the mobile phone. The mobile phone may stop the interrupt interception mechanism, that is, does not filter the NFC interrupt signal generated in the fourth time period, and the mobile phone may process all of the NFC interrupt signals generated in the fourth time period, so that a related NFC service can be successfully implemented, to ensure user satisfaction.

S309: The mobile phone generates N NFC interrupt signals in a fifth time period. The fifth time period is later than the fourth time period.

S310: The mobile phone performs M times of interrupt processing for the N NFC interrupt signals generated in the fifth time period. The quantity N of NFC interrupt signals generated in the fourth time period is greater than the first preset threshold.

It should be noted that optionally, before step S310, the mobile phone may determine whether the value of the mark 1 is the first preset identifier. If the value of the mark 1 is the first preset identifier, it indicates that the quantity of NFC interrupt signals generated in the fourth time period is greater than the first preset threshold, and the mobile phone may start the interrupt interception mechanism, and filter the NFC interrupt signal generated in the fifth time period. If the value of the mark 1 is the second preset identifier, it indicates that the quantity of NFC interrupt signals generated in the fourth time period is less than the first preset threshold, and the mobile phone may not filter the NFC interrupt signal in the fifth time period.

Alternatively, the mobile phone may determine whether the quantity of NFC interrupt signals generated in the fourth time period is greater than the first preset threshold. When the quantity of NFC interrupt signals generated in the fourth time period is greater than the first preset threshold, the mobile phone may start the interrupt interception mechanism. When the quantity of NFC interrupt signals generated in the fourth time period is less than the first preset threshold, it indicates that the mobile phone generates a relatively small quantity of NFC interrupt signals, and the mobile phone does not need to start the interrupt interception mechanism, that is, the mobile phone may process all of the NFC interrupt signals generated by the mobile phone in the fifth time period. In this embodiment, because the quantity (that is, N) of NFC interrupt signals generated in the fourth time period is greater than the first preset threshold, the mobile phone may start the interrupt interception mechanism in the fifth time period, for example, may perform S310.

For example, a start time of the fifth time period may be an end time of the fourth time period. Duration of the fifth time period may be the same as or different from the duration of the fifth time period. This is not limited in this application. Certainly, the start time of the fifth time period may alternatively be a time after the end time of the fourth time period. This is not limited in this application.

It should be noted that the quantity N of NFC interrupt signals generated in the fifth time period is merely an example, and the quantity of NFC interrupt signals generated by the mobile phone in the fifth time period may not be N. The foregoing steps S309-S310 are optional steps. For example, if the mobile phone stops generating the NFC interrupt signal after the foregoing time period (for example, the fourth time period, the third time period, or the second time period) elapses, the mobile phone does not need to perform S309-S310.

It may be understood that the foregoing describes a process in which when NFC interrupt signals in different time periods are filtered, quantities of some NFC interrupt signals, in the different time periods, processed by the mobile phone are the same. For example, quantities of some NFC interrupt signals, in the second time period, the third time period, and the fifth time period, processed by the mobile phone are all M. Certainly, when NFC interrupt signals in different time periods are filtered, quantities of some NFC interrupt signals, in the different time periods, processed by the mobile phone may be different. For example, a quantity of some NFC interrupt signals, in the second time period, processed by the mobile phone is 1, and a quantity of some NFC interrupt signals, in the fifth time period, processed by the mobile phone is 2.

It should be understood that the foregoing time periods (for example, the first time period, the second time period, the third time period, the fourth time period, and the fifth time period) are distinguished for ease of description. In actual application, the mobile phone does not distinguish between time periods. After the mobile phone obtains an NFC interrupt signal, if the NFC interrupt signal needs to be filtered (for example, the value of the mark 1 is the first preset threshold), the mobile phone may filter an NFC interrupt signal in a time period in which the NFC interrupt signal is located. The time period in which the NFC interrupt signal is located may be considered as the second time period, the third time period, or the fifth time period. If the NFC interrupt signal does not need to be filtered (for example, the value of the mark 1 is the first preset threshold), the mobile phone may not filter an NFC interrupt signal in a time period in which the NFC interrupt signal is located. The time period in which the NFC interrupt signal is located may be considered as the first time period or the fourth time period.

In some embodiments, after the fifth time period elapses, if the mobile phone still continues to generate the NFC interrupt signal, the mobile phone may continue to count the NFC interrupt signal generated in a next time period, to determine, by using the quantity of NFC interrupt signals generated in the fifth time period, whether to start the interrupt interception mechanism.

Optionally, when the foregoing time period (for example, the first time period) is a time period in which the mobile phone is in the screen-off state, if the screen of the mobile phone is turned on after the second time period or after the fifth time period, the mobile phone may perform N times of interrupt processing for all of interrupt signals (for example, N NFC interrupt signals) generated by the mobile phone in a sixth time period.

It may be understood that the NFC interrupt signal is a hardware interrupt, and although there is a delay between generation of the NFC interrupt signal and processing of the NFC interrupt signal, the delay is relatively small. Therefore, it may be considered that the mobile phone processes, in a time period, an NFC interrupt signal generated by the mobile phone in the time period.

In some embodiments, when a quantity of NFC interrupt signals generated in a time period is less than or equal to the filtering threshold (for example, M) of the NFC interrupt signal, it indicates that the mobile phone generates a relatively small quantity of NFC interrupt signals in the time period, and the mobile phone does not need to filter the NFC interrupt signal generated in the time period. For example, if the quantity of NFC interrupt signals generated by the mobile phone in the third time period is less than or equal to M, the mobile phone does not need to filter the NFC interrupt signal generated in the third time period, that is, for each NFC interrupt signal generated in the third time period, the mobile phone performs interrupt processing.

Optionally, the filtering threshold of the NFC interrupt signal is less than the first preset threshold. For example, in the foregoing example, if the quantity of NFC interrupt signals generated by the mobile phone in the third time period is less than or equal to M, the quantity of NFC interrupt signals generated in the third time period is less than the first preset threshold, and the mobile phone does not need to filter the NFC interrupt signal generated in the fourth time period.

It may be understood that the performing interrupt processing may mean performing all or some of steps included in the interrupt processing. Performing interrupt processing may alternatively be described as initiating interrupt processing. When one time of interrupt processing is initiated, it may indicate that one or more steps of generating an NFC interrupt event, sending an NFC broadcast message, and starting the target NFC application are performed.

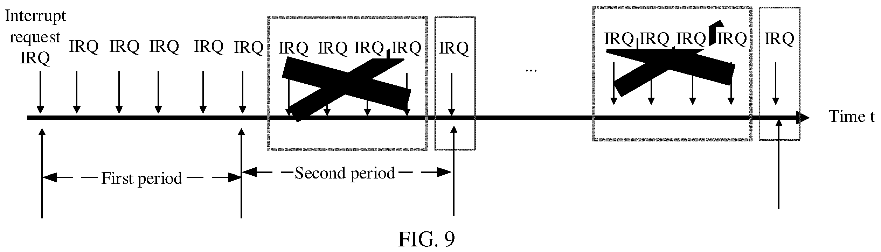

In some embodiments, as shown in FIG. 9, when the mobile phone obtains a first NFC interrupt signal, and when the mobile phone performs a first IRQ processing procedure, a first period (for example, the first time period) starts. An IRQ processing procedure in the first period does not need to be filtered, that is, each IRQ processing procedure needs to be performed. In a second period (for example, the second time period), the mobile phone may perform only an IRQ processing procedure corresponding to a last NFC interrupt signal in the second period, and does not need to perform an IRQ processing procedure corresponding to another NFC interrupt signal in the second period, to effectively reduce power consumption of the mobile phone. In addition, through measurement, the power consumption of the mobile phone can be reduced by approximately 50% by using the NFC interrupt signal processing solution disclosed in this application, thereby greatly improving user experience.

In this application, when the mobile phone generates the NFC interrupt signal, the mobile phone may determine, based on a quantity of NFC interrupt signals generated in a previous time period, whether the mobile phone generates a large quantity of NFC interrupt signals, that is, determine whether to intercept, that is, filter, an NFC interrupt signal generated in a current time period. In addition, when the mobile phone generates a large quantity of NFC interrupt signals, the mobile phone filters only some of the NFC interrupt signals instead of filtering all of the NFC interrupt signals. In this way, while a success rate of implementing a related NFC service is ensured, a case in which the power consumption of the mobile phone is relatively high because the mobile phone needs to process a large quantity of NFC interrupt signals can be avoided.

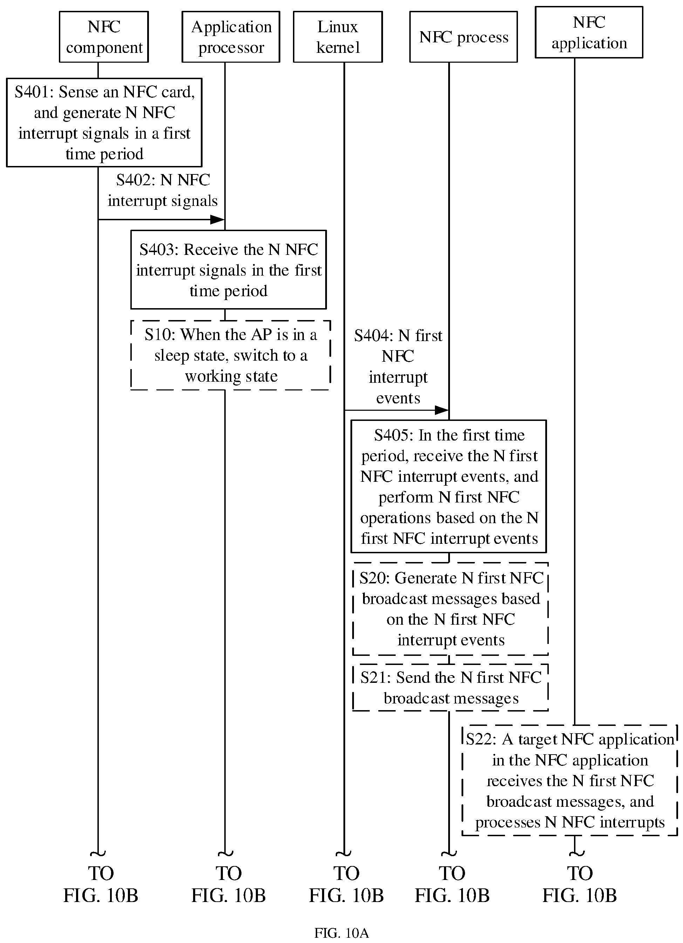

With reference to the software structure shown in FIG. 4, the following describes in detail a possible implementation process of S301-S302 in FIG. 5. The process may include S401-S405 shown in FIG. 10A.

S401: An NFC component in a mobile phone senses an NFC card, and the NFC component in the mobile phone generates N NFC interrupt signals in a first time period.

S402: The NFC component in the mobile phone sends the N NFC interrupt signals to an AP in the mobile phone in the first time period.

For example, when the mobile phone senses the NFC card, the NFC component in the mobile phone may generate the NFC interrupt signal. Each time an NFC interrupt signal is generated, the NFC component may send the generated NFC interrupt signal to the AP.

In some embodiments, the NFC component in the mobile phone may include a first pin. The first pin of the NFC component is connected to a second pin of the AP through a wire. When the mobile phone senses the NFC card, a signal output by the first pin of the NFC component changes from a first signal to a second signal (that is, the NFC interrupt signal). Then, the NFC component may send the second signal to the AP.

The first signal and the second signal are different electrical signals. For example, if the first signal is a low-level signal, the second signal may be a high-level signal. For another example, if the first signal is a high-level signal, the second signal may be a low-level signal. For another example, if the first signal is a rising edge signal, the second signal may be a falling edge signal. For another example, if the first signal is a falling edge signal, the second signal may be a rising edge signal. A quantity of high levels indicates a quantity of interrupt signals and a quantity of high-level signals in the first time period.

S403: The AP receives the N NFC interrupt signals in the first time period.

S404: In the first time period, a Linux kernel on the AP sends the N first NFC interrupt events to an NFC process of the mobile phone based on the N NFC interrupt signals.

In some embodiments, as shown in FIG. 10A, when the AP receives the NFC interrupt signal, the AP may perform S10 in which when the AP is in a sleep state, the AP switches to a working state (the AP is waked up), and the Linux kernel processes the NFC interrupt signal. When the AP is in a working state, the Linux kernel processes the NFC interrupt signal.

In some embodiments, because the NFC interrupt signal in the first time period does not need to be filtered, in the first time period, each time the AP receives an NFC interrupt signal, the Linux kernel on the AP may generate one first NFC interrupt event based on the NFC interrupt signal.

For example, a process of generating, by the Linux kernel, the NFC interrupt event based on the NFC interrupt signal may include: The Linux kernel may obtain an interrupt vector table, and determine an NFC interrupt processing function corresponding to the NFC interrupt signal. The interrupt vector table includes a plurality of external interrupt numbers and an interrupt processing function corresponding to each external interrupt number in the plurality of external interrupt numbers. The interrupt processing function may be used to indicate a processing operation that needs to be performed by the mobile phone.

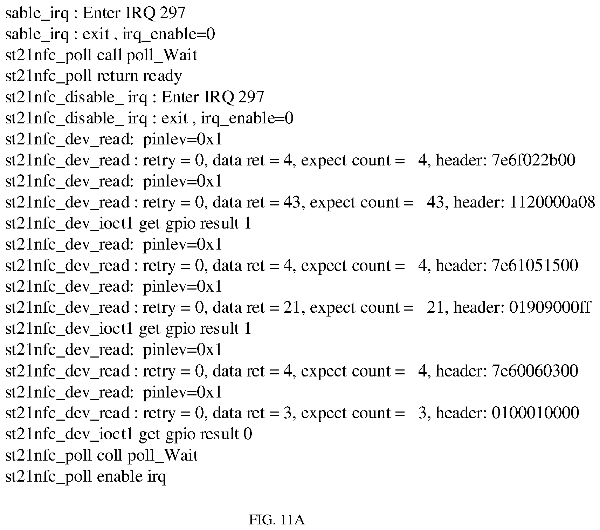

Then, the Linux kernel may determine the interrupt processing function corresponding to the NFC interrupt number from the interrupt vector table. The interrupt processing function may be used to indicate the Linux kernel to read data of the NFC card from the NFC card, and generate an NFC interrupt event based on the data of the NFC card. With reference to a log shown in FIG. 11A, after an IRQ processing procedure is entered, when executing the interrupt processing function corresponding to the NFC interrupt number, the Linux kernel needs to read the data of the NFC card from the NFC card. Herein, 297 in FIG. 11A may be an NFC interrupt number, and header in FIG. 11A may be a front part of the data read from the NFC card. There is no need to print all the read data.

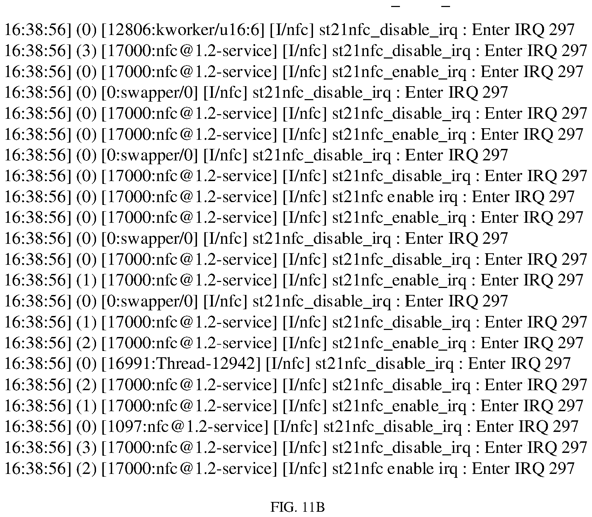

For example, the NFC interrupt number corresponding to the NFC interrupt signal may be a pin number of the first pin/the second pin. With reference to a log shown in FIG. 11B, the interrupt processing function corresponding to the NFC interrupt number (for example, 297) is executed for a plurality of times in the 1 second. That is, in the 1 second, the NFC component frequently generates the NFC interrupt signal, and the NFC interrupt signal needs to be frequently processed.

In some embodiments, in the first time period, when the Linux kernel obtains the NFC interrupt signal sent by the NFC component, the Linux kernel may perform counting by using a counter, to count a quantity of NFC interrupt signals that have been generated in the first time period. When the first time period ends, the Linux kernel may obtain a quantity of NFC interrupt signals generated in the first time period. When the quantity is greater than a first preset threshold, the Linux kernel may set a mark 1 to a first preset identifier or set a mark 2. When the quantity is less than a first preset threshold, the Linux kernel may set a mark 2 to a second preset identifier or clear a mark 1, so that when obtaining an NFC interrupt signal generated in a next time period of the first time period, the Linux kernel may determine, based on the mark 1 or the mark 2, whether to start an interrupt interception mechanism in the next time period.

In some embodiments, when the Linux kernel obtains the NFC interrupt signal sent by the NFC component, the Linux kernel may detect whether a mark 3 is present. The mark 3 is used to indicate that first information does not meet a first preset condition (or described as "the mobile phone does not meet the first preset condition"). When the mark 3 is not detected, the Linux kernel may perform interrupt processing based on the NFC interrupt signal, and may initialize the counter. Alternatively, after the Linux kernel obtains the NFC interrupt signal sent by the NFC component, if a mark 4 is a fourth preset identifier, it indicates that the mobile phone meets a first preset condition, and the NFC interrupt signal may be generated when the mobile phone is used as a virtual NFC object, and the Linux kernel may perform interrupt processing based on the NFC interrupt signal, and may initialize the counter, to provide a success rate of implementing a related NFC service. When the mark 4 is a third preset identifier, it indicates that the NFC interrupt signal may not be generated when a user actively uses an NFC function of the mobile phone, and the Linux kernel may continue the NFC interrupt signal processing solution disclosed in this application, for example, may continue counting.

A value of the mark 3 or the mark 4 may be set by the Linux kernel when determining that the mobile phone does not meet the first preset condition. The Linux kernel may determine, at an interval of a specific time, whether the mobile phone meets the first preset condition, or the Linux kernel may determine, when a start time of a time period arrives, whether the mobile phone meets the first preset condition.

For example, when obtaining each NFC interrupt signal, the Linux kernel may detect whether the value of the mark 4 is the third preset identifier. Alternatively, for a first NFC interrupt signal generated in each time period (for example, the first time period), after obtaining the first NFC interrupt signal generated in the time period, the Linux kernel may determine whether the value of the mark 4 is the third preset identifier, and may use a determining result as a determining result corresponding to all NFC interrupt signals in the time period. If the determining result corresponding to the first NFC interrupt signal indicates that the value of the mark 4 is the third preset identifier, the Linux kernel may consider that determining results corresponding to the NFC interrupt signals generated in the time period all indicate that the value of the mark 4 is the third preset identifier.

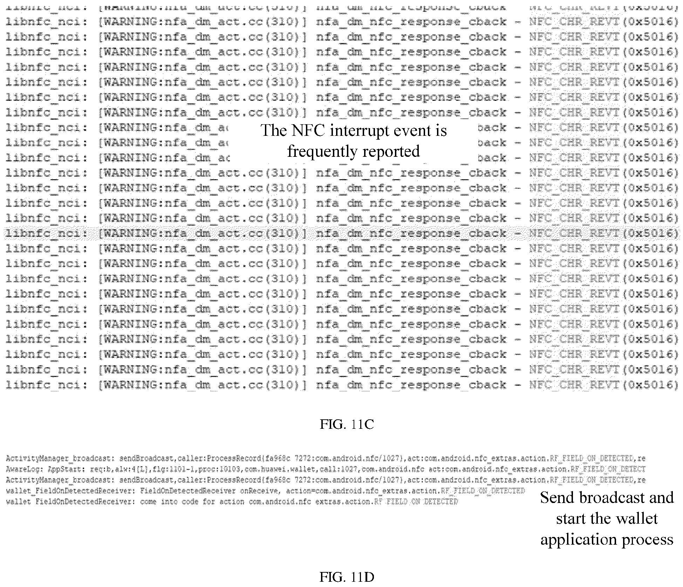

For example, in the first time period, each time an NFC interrupt signal is obtained, the Linux kernel generates one NFC interrupt event. Then, the Linux kernel may report the NFC interrupt event to the NFC process. Herein, the NFC interrupt event generated in the first time period may be the first NFC interrupt event. As shown in FIG. 11C, each log represents reporting of one NFC interrupt event. It may be learned that the NFC interrupt event is frequently reported. For example, in the log shown in FIG. 11C, nfa_dm_nfc_response_cback represents reporting of one NFC interrupt event, and 0x5016 indicates an event type corresponding to the NFC interrupt event. Optionally, 0x5016 is a first preset type, that is, the event type corresponding to the NFC interrupt event is 0x5016. The NFC process may send one NFC broadcast message based on the NFC interrupt event.

S405: In the first time period, the NFC process receives the N first NFC interrupt events, and performs N first NFC operations based on the N first NFC interrupt events.

In some embodiments, the process in S405 may include S20-S22 shown in FIG. 10A. In S20, the NFC process generates N first NFC broadcast messages based on the N first NFC interrupt events. Then, in S21, the NFC process sends the N first NFC broadcast messages. Then, in S22, a target NFC application in an NFC application in the mobile phone receives the N first NFC broadcast messages, and processes N NFC interrupts.

For example, each time an NFC interrupt event (for example, the first NFC interrupt event) is received, the NFC process generates one NFC broadcast message based on the NFC interrupt event. Then, the NFC process broadcasts the NFC broadcast message. Then, after the NFC application in the mobile phone receives the NFC broadcast message, the NFC application starts. With reference to a log shown in FIG. 11D, it indicates that the NFC broadcast message may start a wallet application process, that is, may trigger a wallet application to start. In the log, sendBroadcast,caller:com.android.nfc indicates that a name of a process for sending the broadcast message is com.android.nfc, and AppStart: ..., proc:com.xxx.call indicates that an xxx application is started. For example, xxx is the wallet (wallet) application.

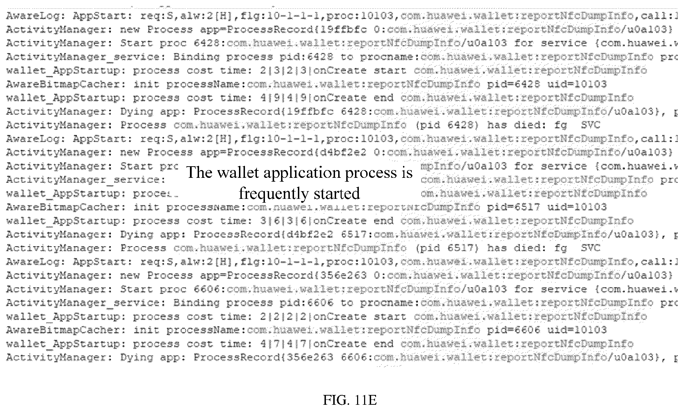

When there are a relatively large quantity of NFC broadcast messages, it may be learned from a log shown in FIG. 11E that the wallet application is frequently started. For example, a field following the Start proc field in the log shown in FIG. 11E indicates a name of an application process that is started. For example, Start proc:com.xxx indicates that the xxx application is started, and Start proc:com.xxx:reportNfcDumpInfo in the log indicates that an NFC-related process of the xxx application is started.

After starting, the NFC application determines whether to process the NFC broadcast message.

If yes, it indicates that the NFC application is the target NFC application that matches the NFC object, that is, it indicates that the NFC application needs to process the NFC broadcast message, and the NFC application processes the NFC interrupt. For example, if the NFC object is a bus card, and the wallet application is the target NFC application, that the wallet application processes the NFC interrupt may include processing such as writing data into the bus card, or reading required data from the bus card.

If no, the NFC application does not process the NFC broadcast message.

In some embodiments, a process of the IRQ processing procedure may include starting from generation of the NFC interrupt event based on the NFC interrupt signal by the Linux kernel, and ending with processing of the NFC interrupt by the target NFC application.

For a process of determining the target NFC application, refer to the related content in the embodiment in FIG. 5. Details are not described herein again.

It should be understood that because the NFC interrupt signal is a hardware interrupt, a processing process of the NFC interrupt signal is relatively fast. Therefore, although there is a delay between generation of the NFC interrupt signal and processing of the NFC interrupt signal, a time difference is very small, and it may be considered that generation of the NFC interrupt signal and processing of the NFC interrupt signal are synchronous. For example, although there is a delay between a time at which the Linux kernel reports the first NFC interrupt event and a time at which the NFC component generates the NFC interrupt signal, the delay is very small. Therefore, it may be considered that the NFC component generates the N NFC interrupt signals in the first time period, and the Linux kernel reports, in the first time period, the NFC interrupt event corresponding to the NFC interrupt signal.

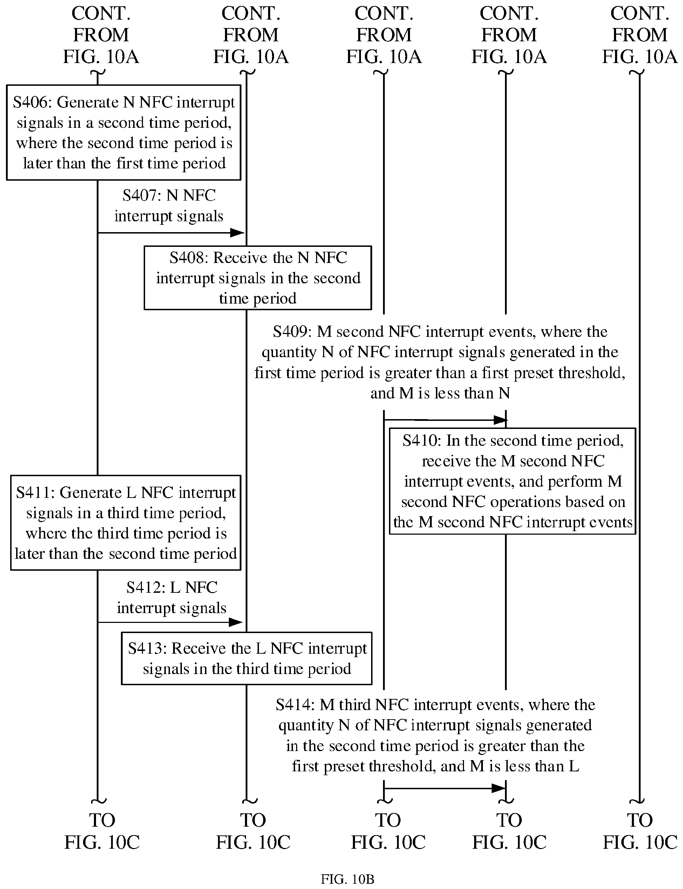

Still with reference to the software structure shown in FIG. 4, the following describes in detail a possible implementation process of S303-S304 in FIG. 5. The process may include S406-S410 shown in FIG. 10B.

S406: The NFC component generates N NFC interrupt signals in a second time period. The second time period is later than the first time period.

S407: The NFC component in the mobile phone sends the N NFC interrupt signals to the AP in the mobile phone in the second time period.

S408: The AP receives the N NFC interrupt signals in the second time period.

S409: In the second time period, the Linux kernel sends the M second NFC interrupt events to the NFC process of the mobile phone based on the N NFC interrupt signals. The quantity N of NFC interrupt signals generated in the first time period is greater than the first preset threshold, and M is less than N.

For example, in the second time period, when the Linux kernel obtains the NFC interrupt signal sent by the NFC component, the Linux kernel detects whether a value of the mark 1 is the first preset identifier. If yes, it indicates that the quantity of NFC interrupt signals generated in the previous time period is greater than the first preset threshold, and the Linux kernel may start the interrupt interception mechanism. For example, the Linux kernel may accumulate the NFC interrupt signal obtained in the second time period until a last NFC interrupt signal generated in the second time period is obtained, and the Linux kernel may select M NFC interrupt signals from all of the NFC interrupt signals generated in the second time period, and perform interrupt processing on the M NFC interrupt signals.

If the value of the mark 1 is the second preset identifier, it indicates that the quantity of NFC interrupt signals generated in the previous time period is less than the first preset threshold, and the Linux kernel may not start the interrupt interception mechanism, that is, may process, based on a process of processing the NFC interrupt signal generated in the first time period, the NFC interrupt signal generated in the second time period.

In some other embodiments, in the second time period, when the Linux kernel obtains the NFC interrupt signal sent by the NFC component, and when the Linux kernel may detect the mark 1, it indicates that the quantity of NFC interrupt signals generated in the previous time period is greater than the first preset threshold, and the Linux kernel may start the interrupt interception mechanism. When the mark 1 is not detected, it indicates that the quantity of NFC interrupt signals generated in the previous time period is less than the first preset threshold, and the Linux kernel may not start the interrupt interception mechanism.

In some embodiments, in the second time period, when the Linux kernel obtains the NFC interrupt signal sent by the NFC component, the Linux kernel may detect whether the mark 3 is present. The mark 3 is used to indicate that the first information (that is, the mobile phone) does not meet the first preset condition. When the mark 3 is not detected, the Linux kernel may perform interrupt processing based on the NFC interrupt signal, and may initialize the counter. Alternatively, when the mark 4 is the third preset identifier, it may indicate that the mobile phone does not meet the first preset condition, and the NFC interrupt signal may not be generated when the mobile phone is used as a virtual NFC object, and the Linux kernel may continue to count the NFC interrupt signal.

S410: In the second time period, the NFC process receives the M second NFC interrupt events, and performs M second NFC operations based on the M second NFC interrupt events.

For example, an implementation process of S410 is similar to the implementation process of S405. Details are not described herein again.

In some embodiments, when a time period (for example, the second time period) ends, the Linux kernel may obtain a quantity of NFC interrupt signals generated in the time period. When the quantity is greater than the first preset threshold, the mobile phone may set the value of the mark 1 to the first preset identifier or set the mark 2. When the quantity is less than the first preset threshold, the mobile phone may set the mark 1 to the second preset identifier or clear the mark 2.

In the second time period, after the Linux kernel obtains an NFC interrupt signal sent by the NFC component, for example, when a time difference before a previous NFC interrupt signal sent by the NFC component is greater than a preset time, it indicates that the NFC interrupt is decreased, and the Linux kernel may directly perform interrupt processing based on the NFC interrupt signal, for example, perform interrupt processing on the NFC interrupt signal, or perform interrupt signals on all of NFC interrupt signals that have been generated in the second time period. Optionally, the Linux kernel may further initialize the counter, and clear the mark 2, or set the value of the mark 1 to the second preset identifier.

In some embodiments, the Linux kernel may further perform another operation in the second time period. For details, refer to the description content corresponding to S303-S304. For example, when obtaining the NFC interrupt signal in the second time period, the Linux kernel determines whether the NFC interrupt signal is the same as the previous NFC interrupt signal. If the NFC interrupt signal is the same as the previous NFC interrupt signal, the Linux kernel continues to execute the NFC interrupt signal processing solution disclosed in this application. Otherwise, the Linux kernel may directly perform interrupt processing based on the NFC interrupt signal. Optionally, the Linux kernel may further initialize the counter, and clear the mark 2, or set the value of the mark 1 to the second preset identifier.

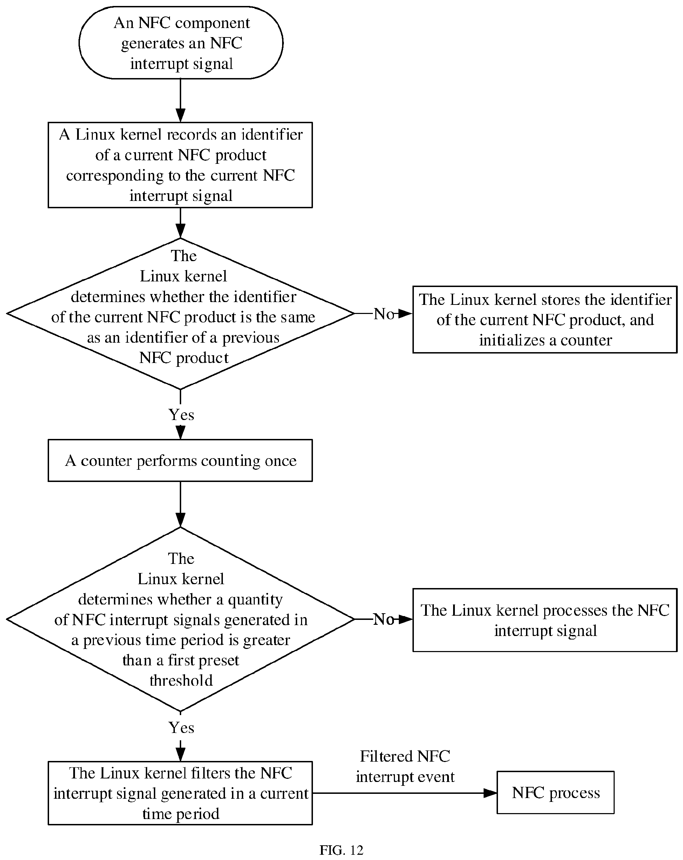

In some embodiments, as shown in FIG. 12, after obtaining an NFC interrupt signal (or referred to as a current NFC interrupt signal) generated by the NFC component, the Linux kernel may record an identifier of an NFC product corresponding to the NFC interrupt signal (that is, an identifier of a current NFC product corresponding to the current NFC interrupt signal). Then, the Linux kernel may determine whether the identifier of the current NFC product is the same as an identifier of a previous NFC product. The identifier of the previous NFC product indicates an identifier of an NFC product corresponding to a previous NFC interrupt signal of the current NFC interrupt signal.

If no, the Linux kernel may store the identifier (that is, an identifier of a new NFC product) of the NFC product corresponding to the NFC interrupt signal, and initialize the counter, that is, reset the counter. If yes, the Linux kernel may perform counting once by using the counter. Then, the Linux kernel may determine whether a quantity of NFC interrupt signals generated in a previous time period of a current time period is greater than the first preset threshold. If no, it indicates that the mobile phone generates a normal quantity of NFC interrupt signals, and the Linux kernel may directly process the NFC interrupt signal, that is, generate an NFC interrupt event based on the NFC interrupt signal. If yes, it indicates that the mobile phone generates an abnormal quantity of NFC interrupt signals, and the Linux kernel may start the interrupt interception mechanism, filter the NFC interrupt signal generated in the current time period, that is, discard some duplicate NFC interrupt signals in the current time period, and generate a filtered NFC interrupt event based on a filtered NFC interrupt signal. Then, the Linux kernel may send the filtered NFC interrupt event to the NFC process, to reduce a quantity of NFC broadcast messages that need to be sent by the NFC process, that is, reduce a quantity of times a related NFC application in the mobile phone is started, and reduce power consumption of the mobile phone.

It should be understood that if there is no previous time period for a time period, the time period may be the first time period.

In this application, when the NFC card is close to the mobile phone, the NFC component in the mobile phone is waked up, and the NFC component in the mobile phone wakes up the AP by using the NFC interrupt signal. After being waked up, the AP needs to process the NFC interrupt signal reported by the NFC. When the NFC card is in a state of being close to the mobile phone, the NFC component and the AP may be frequently waked up, resulting in an increase in an amount of power consumed by the mobile phone. In addition, after the NFC component is waked up, the mobile phone may hold a lock for a short time to prevent a sleep problem, consuming a relatively large amount of power. Therefore, to reduce the amount of consumed power, when it is determined that the NFC component generates a relatively large quantity of NFC interrupt signals, the Linux kernel may start the interrupt interception mechanism, to reduce the amount of consumed power. In addition, load of the mobile phone can be effectively reduced.

With reference to the software structure shown in FIG. 4, the following describes in detail a possible implementation process of S305-S306 in FIG. 5. The process may include S411-S415 shown in FIG. 10B-FIG. 10C.

S411: The NFC component generates L NFC interrupt signals in a third time period. The third time period is later than the second time period.

S412: The NFC component in the mobile phone sends the L NFC interrupt signals to the AP in the mobile phone.

S413: The AP receives the L NFC interrupt signals in the third time period.

S414: In the third time period, the Linux kernel sends the M third NFC interrupt events to the NFC process of the mobile phone based on the L NFC interrupt signals. The quantity N of NFC interrupt signals generated in the second time period is greater than the first preset threshold, and M is less than L.

S415: In the third time period, the NFC process receives the M third NFC interrupt events, and performs M third NFC operations based on the M third NFC interrupt events.

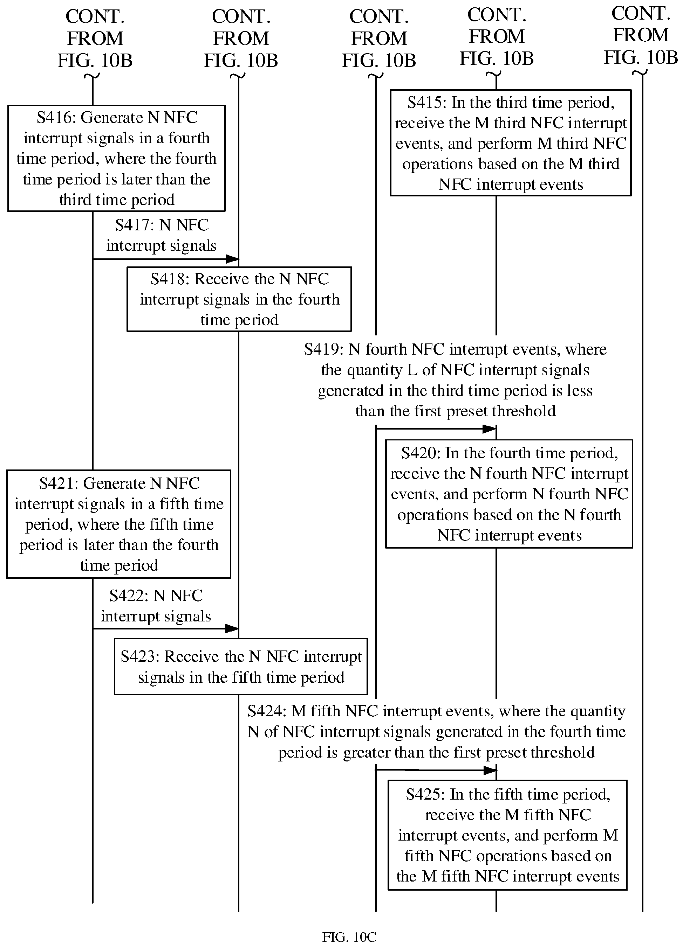

With reference to the software structure shown in FIG. 4, the following describes in detail a possible implementation process of S307-S308 in FIG. 5. The process may include S416-S420 shown in FIG. 10C.

S416: The NFC component generates N NFC interrupt signals in a fourth time period. The fourth time period is later than the third time period.

S417: The NFC component in the mobile phone sends the N NFC interrupt signals to the AP in the mobile phone.

S418: The AP receives the N NFC interrupt signals in the fourth time period.

S419: In the fourth time period, the Linux kernel sends the N fourth NFC interrupt events to the NFC process of the mobile phone based on the N NFC interrupt signals. The quantity L of NFC interrupt signals generated in the third time period is less than the first preset threshold.

S420: In the fourth time period, the NFC process receives the N fourth NFC interrupt events, and performs N fourth NFC operations based on the N fourth NFC interrupt events.

With reference to the software structure shown in FIG. 4, the following describes in detail a possible implementation process of S309-S310 in FIG. 5. The process may include S421-S425 shown in FIG. 10C.

S421: The NFC component generates N NFC interrupt signals in a fifth time period. The fifth time period is later than the fourth time period.

S422: The NFC component in the mobile phone sends the N NFC interrupt signals to the AP in the mobile phone.

S423: The AP receives the N NFC interrupt signals in the fifth time period.

S424: In the fifth time period, the Linux kernel sends the M fifth NFC interrupt events to the NFC process of the mobile phone based on the N NFC interrupt signals. The quantity N of NFC interrupt signals generated in the fourth time period is greater than the first preset threshold.

S425: In the fifth time period, the NFC process receives the M fifth NFC interrupt events, and performs M fifth NFC operations based on the M fifth NFC interrupt events.

It should be understood that a receiving/sending operation between modules in the mobile phone described in this application actually refers to invocation of a function.

In some embodiments, this application provides a computer-readable storage medium, including computer instructions. When the computer instructions are run on a Bluetooth device, the electronic device is enabled to perform the interrupt processing method described above.

In some embodiments, this application provides a computer program product. When the computer program product runs on a Bluetooth device, the electronic device is enabled to perform the interrupt processing method described above.

It may be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. An interrupt processing method, comprising:
sensing (S301, S401), by an electronic device (200), a near field communication, NFC, product, and generating (S301), by the electronic device (200), a first quantity of NFC interrupt signals in a first time period;
initiating (S302), by the electronic device (200), the first quantity of times of interrupt processing for the first quantity of NFC interrupt signals;
generating (S303), by the electronic device (200), a second quantity of NFC interrupt signals in a second time period, wherein the second time period is later than the first time period; and
initiating (S304), by the electronic device (200), a third quantity of times of interrupt processing for the second quantity of NFC interrupt signals, wherein the third quantity is less than the second quantity;
wherein initiating, by the electronic device (200), the third quantity of times of interrupt processing for the second quantity of NFC interrupt signals comprises:
determining, by the electronic device (200), that the first quantity is greater than a first preset threshold, and initiating the third quantity of times of interrupt processing for the second quantity of NFC interrupt signals;
**characterized in that** initiating, by the electronic device (200), the third quantity of times of interrupt processing for the second quantity of NFC interrupt signals further comprises:
determining, by the electronic device (200) in the second time period, that a first mark, which indicates whether the first quantity of NFC interrupt signals generated in the first time period is greater than the first preset threshold, is set to a
first preset identifier when the first quantity is greater than the threshold, or to a second preset identifier when the first quantity is less than the threshold, and initiating, by the electronic device (200), the third quantity of times of interrupt processing for the second quantity of NFC interrupt signals; or
determining, by the electronic device (200) in the second time period, that a second mark which is set to indicate that the first quantity of NFC interrupt signals generated in the first time period is greater than the first preset threshold, is present, and initiating, by the electronic device (200), the third quantity of times of interrupt processing for the second quantity of NFC interrupt signals;
wherein the electronic device counts, by using a counter, a quantity of NFC interrupt signals generated in each time period, and the method further comprises:
after the second time period, upon generation of a first NFC interrupt signal in a next time period, obtaining, by the electronic device (200), an NFC product identifier by reading data from the sensed NFC product corresponding to the first NFC interrupt signal, and determining, by the electronic device (200), that the obtained NFC product identifier is different from an NFC product identifier obtained from a previous NFC interrupt signal;
resetting, by the electronic device (200), the counter; and
modifying, by the electronic device (200), the first mark to the second preset identifier, or clearing the second mark.

2. The method according to claim 1, further comprising:
generating (S305), by the electronic device (200), a fourth quantity of NFC interrupt signals in a third time period, wherein the third time period is later than the second time period, the fourth quantity is less than the first quantity, and the fourth quantity is less than the second quantity; and
initiating (S306), by the electronic device (200), the fourth quantity of times of interrupt processing for the fourth quantity of NFC interrupt signals.

3. The method according to claim 2, further comprising:
generating (S307), by the electronic device (200), a fifth quantity of NFC interrupt signals in a fourth time period, wherein the fourth time period is later than the third time period, and the fifth quantity is greater than the fourth quantity; and
initiating (S308), by the electronic device (200), a fifth quantity of times of interrupt processing for the fifth quantity of NFC interrupt signals generated in the fourth time period.

4. The method according to claim 3, further comprising:
generating (S309), by the electronic device (200), a sixth quantity of NFC interrupt signals in a fifth time period, wherein the fifth time period is later than the fourth time period, and the sixth quantity is greater than the fourth quantity; and
initiating (S310), by the electronic device (200), a seventh quantity of times of interrupt processing for the sixth quantity of NFC interrupt signals generated in the fifth time period, wherein the seventh quantity is less than the sixth quantity.

5. The method according to any one of claims 1 to 4, wherein initiating one time of interrupt processing comprises at least one of generating one NFC interrupt event, sending one NFC broadcast message, wherein the NFC broadcast message is an operating system-level broadcast message triggered by an NFC event, and is delivered within the electronic device to applications registered to listen for NFC events, and starting a target NFC application for one time; and
the initiating the first quantity of times of interrupt processing comprises at least one of generating the first quantity of NFC interrupt events, sending the first quantity of NFC broadcast messages, and starting the target NFC application for X times, wherein X is equal to the first quantity.

6. The method according to any one of claims 1 to 5, further comprising:
determining (S304), by the electronic device (200) in the second time period, that the electronic device (200) does not meet a first preset condition, wherein
the first preset condition comprises at least one of the following: the electronic device (200) is in a screen-on state, a foreground application of the electronic device (200) is an NFC application in the electronic device (200), and an NFC component in the electronic device (200) is in a write mode.

7. The method according to any one of claims 1 to 6, further comprising:
displaying, by the electronic device (200), first prompt information (20, 21) after the first time period, wherein the first prompt information (20, 21) is used to prompt a user that an abnormal NFC product touches the electronic device (200), and advise the user to separately place the electronic device (200) and the NFC product.

8. The method according to any one of claims 1 to 7, wherein the interrupt processing comprises:
receiving (S403), by the target NFC application in the electronic device (200), a NFC broadcast message, wherein the NFC broadcast message is an operating system-level broadcast message triggered by an NFC event, and is delivered within the electronic device to applications registered to listen for NFC events; and processing an NFC interrupt, wherein a target NFC application represents an NFC application that is in the electronic device (200) and that is registered to listen for an NFC message, the NFC broadcast message is generated based on an NFC interrupt event, the NFC interrupt event is generated by the electronic device (200) based on the NFC interrupt signal, and the NFC broadcast message comprises an identifier of the NFC product and/or a type of the NFC product.

9. The method according to claim 8, wherein the initiating a third quantity of times of interrupt processing comprises:
initiating, by the electronic device (200), target interrupt processing, and displaying second prompt information (10), wherein the second prompt information (10) comprises an option of at least one NFC application, and the target interrupt processing is one of the third quantity of times of interrupt processing.

10. An electronic device (200), wherein the electronic device (200) comprises a near field communication, NFC, component, a storage (121), and one or more processors (110); and the storage (121) is electrically connected to the NFC component and the processor (110); and
the display (194) is configured to display (194) an image generated by the processor (110), the storage (121) is configured to store computer program code, and the computer program code is executed to implement the following method:
the NFC component is configured to: sense (S301, S401) an NFC product, generate a first quantity of NFC interrupt signals in a first time period, and send the first quantity of NFC interrupt signals to the processor (110);
the processor (110) is configured to initiate the first quantity of times of interrupt processing for the first quantity of NFC interrupt signals;
the NFC component is further configured to: generate (S303) a second quantity of NFC interrupt signals in a second time period, and send the second quantity of NFC interrupt signals to the processor (110), wherein the second time period is later than the first time period; and
the processor (110) is further configured to initiate (S304) a third quantity of times of interrupt processing for the second quantity of NFC interrupt signals, wherein the third quantity is less than the second quantity;
wherein the processor (110), to initiate the third quantity of times of interrupt processing for the second quantity of NFC interrupt signals, is further configured to:
determine, by the electronic device (200), that the first quantity is greater than a first preset threshold, and initiating the third quantity of times of interrupt processing for the second quantity of NFC interrupt signals; and
**characterized in that** the processor (110), to initiate the third quantity of times of interrupt processing for the second quantity of NFC interrupt signals, is further configured to:
determine, by the electronic device (200) in the second time period, that a first mark, which indicates whether the first quantity of NFC interrupt signals generated in the first time period is greater than the first preset threshold, is set to a first preset identifier when the first quantity is greater than the threshold, or to a second preset identifier when the first quantity is less than the threshold, and initiate, by the electronic device (200), the third quantity of times of interrupt processing for the second quantity of NFC interrupt signals; or
determine, by the electronic device (200) in the second time period, that a second mark which is set to indicate that the first quantity of NFC interrupt signals generated in the first time period is greater than the first preset threshold, is present, and initiate, by the electronic device (200), the third quantity of times of interrupt processing for the second quantity of NFC interrupt signals;
wherein the electronic device is adapted to count, by using a counter, a quantity of NFC interrupt signals generated in each time period, and
after the second time period, upon generation of a first NFC interrupt signal in a next time period, to obtain an NFC product identifier by reading data from the sensed NFC product corresponding to the first NFC interrupt signal, and to determine that the obtained NFC product identifier is different from an NFC product identifier obtained from a previous NFC interrupt signal;
to reset the counter; and
to modify the first mark to the second preset identifier, or to clear the second mark.

11. A computer-readable storage medium, comprising computer instructions, wherein when the computer instructions are run on an electronic device (200), the electronic device (200) is enabled to perform the method according to any one of claims 1 to 9.

## Patentansprüche

1. Unterbrechungsverarbeitungsverfahren, umfassend:
Erkennen (S301, S401) eines Nahfeldkommunikations-, NFC-, Produkts durch eine elektronische Vorrichtung (200) und Erzeugen (S301) einer ersten Anzahl von NFC-Unterbrechungssignalen durch die elektronische Vorrichtung (200) in einem ersten Zeitraum;
Initiieren (S302) der ersten Anzahl von Unterbrechungsverarbeitungsvorgängen für die erste Anzahl von NFC-Unterbrechungssignalen durch die elektronische Vorrichtung (200);
Erzeugen (S303) einer zweiten Anzahl von NFC-Unterbrechungssignalen durch die elektronische Vorrichtung (200) in einem zweiten Zeitraum, wobei der zweite Zeitraum später als der erste Zeitraum liegt; und
Initiieren (S304) einer dritten Anzahl von Unterbrechungsverarbeitungsvorgängen für die zweite Anzahl von NFC-Unterbrechungssignalen durch die elektronische Vorrichtung (200), wobei die dritte Anzahl kleiner als die zweite Anzahl ist;
wobei das Initiieren der dritten Anzahl von Unterbrechungsverarbeitungsvorgängen für die zweite Anzahl von NFC-Unterbrechungssignalen durch die elektronische Vorrichtung (200) umfasst:
Bestimmen durch die elektronische Vorrichtung (200), dass die erste Anzahl größer als ein erster voreingestellter Schwellenwert ist, und Initiieren der dritten Anzahl von Unterbrechungsverarbeitungsvorgängen für die zweite Anzahl von NFC-Unterbrechungssignalen;
**dadurch gekennzeichnet, dass** das Initiieren der dritten Anzahl von Unterbrechungsverarbeitungsvorgängen für die zweite Anzahl von NFC-Unterbrechungssignalen durch die elektronische Vorrichtung (200) umfasst:
Bestimmen durch die elektronische Vorrichtung (200) im zweiten Zeitraum, dass eine erste Markierung, die angibt, ob die im ersten Zeitraum erzeugte erste Anzahl von NFC-Unterbrechungssignalen größer als der erste voreingestellte Schwellenwert ist, auf einen ersten voreingestellten Identifikator gesetzt ist, wenn die erste Anzahl größer als der Schwellenwert ist, oder auf einen zweiten voreingestellten Identifikator, wenn die erste Anzahl kleiner als der Schwellenwert ist, und Initiieren der dritten Anzahl von Unterbrechungsverarbeitungsvorgängen für die zweite Anzahl von NFC-Unterbrechungssignalen durch die elektronische Vorrichtung (200); oder
Bestimmen durch die elektronische Vorrichtung (200) im zweiten Zeitraum, dass eine zweite Markierung vorhanden ist, die gesetzt ist, um anzuzeigen, dass die im ersten Zeitraum erzeugte erste Anzahl von NFC-Unterbrechungssignalen größer als der erste voreingestellte Schwellenwert ist, und Initiieren der dritten Anzahl von Unterbrechungsverarbeitungsvorgängen für die zweite Anzahl von NFC-Unterbrechungssignalen durch die elektronische Vorrichtung (200);
wobei die elektronische Vorrichtung unter Verwendung eines Zählers eine Anzahl von in jedem Zeitraum erzeugten NFC-Unterbrechungssignalen zählt und das Verfahren ferner umfasst:
nach dem zweiten Zeitraum, bei Erzeugung eines ersten NFC-Unterbrechungssignals in einem nächsten Zeitraum, Erhalten eines NFC-Produkt-Identifikators durch die elektronische Vorrichtung (200) durch Auslesen von Daten aus dem erkannten NFC-Produkt, das dem ersten NFC-Unterbrechungssignal entspricht, und Bestimmen durch die elektronische Vorrichtung (200), dass der erhaltene NFC-Produkt-Identifikator sich von einem aus einem vorherigen NFC-Unterbrechungssignal erhaltenen NFC-Produkt-Identifikator unterscheidet;
Zurücksetzen des Zählers durch die elektronische Vorrichtung (200); und
Ändern der ersten Markierung auf den zweiten voreingestellten Identifikator durch die elektronische Vorrichtung (200) oder Löschen der zweiten Markierung.

2. Verfahren nach Anspruch 1, ferner umfassend:
Erzeugen (S305) einer vierten Anzahl von NFC-Unterbrechungssignalen durch die elektronische Vorrichtung (200) in einem dritten Zeitraum, wobei der dritte Zeitraum nach dem zweiten Zeitraum liegt, die vierte Anzahl kleiner als die erste Anzahl ist und die vierte Anzahl kleiner als die zweite Anzahl ist; und
Initiieren (S306) der vierten Anzahl von Unterbrechungsverarbeitungsvorgängen für die vierte Anzahl von NFC-Unterbrechungssignalen durch die elektronische Vorrichtung (200).

3. Verfahren nach Anspruch 2, ferner umfassend:
Erzeugen (S307) einer fünften Anzahl von NFC-Unterbrechungssignalen durch die elektronische Vorrichtung (200) in einem vierten Zeitraum, wobei der vierte Zeitraum nach dem dritten Zeitraum liegt und die fünfte Anzahl größer als die vierte Anzahl ist; und
Initiieren (S308) einer fünften Anzahl von Unterbrechungsverarbeitungsvorgängen für die fünfte Anzahl von NFC-Unterbrechungssignalen, die im vierten Zeitraum erzeugt wurden, durch die elektronische Vorrichtung (200).

4. Verfahren nach Anspruch 3, ferner umfassend:
Erzeugen (S309) einer sechsten Anzahl von NFC-Unterbrechungssignalen durch die elektronische Vorrichtung (200) in einem fünften Zeitraum, wobei der fünfte Zeitraum nach dem vierten Zeitraum liegt und die sechste Anzahl größer als die vierte Anzahl ist; und
Initiieren (S310) einer siebten Anzahl von Unterbrechungsverarbeitungsvorgängen für die sechste Anzahl von NFC-Unterbrechungssignalen, die im fünften Zeitraum erzeugt wurden, durch die elektronische Vorrichtung (200), wobei die siebte Anzahl kleiner als die sechste Anzahl ist.

5. Verfahren nach einem der Ansprüche 1 bis 4, wobei das Initiieren eines Unterbrechungsverarbeitungsvorgangs mindestens eines der folgenden umfasst: Erzeugen eines NFC-Unterbrechungsereignisses, Senden einer NFC-Broadcast-Nachricht, wobei die NFC-Broadcast-Nachricht eine durch ein NFC-Ereignis ausgelöste Broadcast-Nachricht auf Betriebssystemebene ist und innerhalb der elektronischen Vorrichtung an Anwendungen geliefert wird, die registriert sind, um auf NFC-Ereignisse zu lauschen, sowie einmaliges Starten einer Ziel-NFC-Anwendung; und
das Initiieren der ersten Anzahl von Unterbrechungsverarbeitungsvorgängen umfasst mindestens eines der folgenden: Erzeugen der ersten Anzahl von NFC-Unterbrechungsereignissen, Senden der ersten Anzahl von NFC-Broadcast-Nachrichten und X-maliges Starten der Ziel-NFC-Anwendung, wobei X gleich der ersten Anzahl ist.

6. Verfahren nach einem der Ansprüche 1 bis 5, ferner umfassend:
Bestimmen (S304) durch die elektronische Vorrichtung (200) im zweiten Zeitraum, dass die elektronische Vorrichtung (200) eine erste voreingestellte Bedingung nicht erfüllt, wobei
die erste voreingestellte Bedingung mindestens eines der folgenden Elemente umfasst: die elektronische Vorrichtung (200) befindet sich in einem eingeschalteten Zustand, eine Vordergrundanwendung der elektronischen Vorrichtung (200) ist eine NFC-Anwendung in der elektronischen Vorrichtung (200), und eine NFC-Komponente in der elektronischen Vorrichtung (200) befindet sich in einem Schreibmodus.

7. Verfahren nach einem der Ansprüche 1 bis 6, ferner umfassend:
Anzeigen erster Hinweisinformationen (20, 21) durch die elektronische Vorrichtung (200) nach dem ersten Zeitraum, wobei die ersten Hinweisinformationen (20, 21) dazu dienen, einen Benutzer darauf hinzuweisen, dass ein abnormales NFC-Produkt die elektronische Vorrichtung (200) berührt, und dem Benutzer anzuraten, die elektronische Vorrichtung (200) und das NFC-Produkt getrennt voneinander zu platzieren.

8. Verfahren nach einem der Ansprüche 1 bis 7, wobei die Unterbrechungsverarbeitung umfasst:
Empfangen (S403) einer NFC-Broadcast-Nachricht durch die Ziel-NFC-Anwendung in der elektronischen Vorrichtung (200), wobei die NFC-Broadcast-Nachricht eine Broadcast-Nachricht auf Betriebssystemebene ist, die durch ein NFC-Ereignis ausgelöst wird und innerhalb der elektronischen Vorrichtung an Anwendungen geliefert wird, die registriert sind, um auf NFC-Ereignisse zu lauschen; und Verarbeiten einer NFC-Unterbrechung, wobei eine Ziel-NFC-Anwendung eine NFC-Anwendung darstellt, die sich in der elektronischen Vorrichtung (200) befindet und registriert ist, um auf eine NFC-Nachricht zu lauschen, die NFC-Broadcast-Nachricht basierend auf einem NFC-Unterbrechungsereignis erzeugt wird, das NFC-Unterbrechungsereignis durch die elektronische Vorrichtung (200) basierend auf dem NFC-Unterbrechungssignal erzeugt wird und die NFC-Broadcast-Nachricht einen Identifikator des NFC-Produkts und/oder einen Typ des NFC-Produkts umfasst.

9. Verfahren nach Anspruch 8, wobei das Initiieren einer dritten Anzahl von Unterbrechungsverarbeitungsvorgängen umfasst:
Initiieren einer Ziel-Unterbrechungsverarbeitung durch die elektronische Vorrichtung (200) und Anzeigen zweiter Hinweisinformationen (10), wobei die zweiten Hinweisinformationen (10) eine Option für mindestens eine NFC-Anwendung umfassen und die Ziel-Unterbrechungsverarbeitung einer der dritten Anzahl von Unterbrechungsverarbeitungsvorgängen ist.

10. Elektronische Vorrichtung (200), wobei die elektronische Vorrichtung (200) eine Nahfeldkommunikations-Komponente (NFC-Komponente), einen Speicher (121) und einen oder mehrere Prozessoren (110) umfasst; und wobei der Speicher (121) elektrisch mit der NFC-Komponente und dem Prozessor (110) verbunden ist; und
die Anzeige (194) dazu konfiguriert ist, ein vom Prozessor (110) erzeugtes Bild anzuzeigen (194), wobei der Speicher (121) dazu konfiguriert ist, Computerprogrammcode zu speichern, und wobei der Computerprogrammcode ausgeführt wird, um das folgende Verfahren zu implementieren:
die NFC-Komponente ist dazu konfiguriert: ein NFC-Produkt zu erkennen (S301, S401), eine erste Anzahl von NFC-Unterbrechungssignalen in einem ersten Zeitraum zu erzeugen und die erste Anzahl von NFC-Unterbrechungssignalen an den Prozessor (110) zu senden;
der Prozessor (110) ist dazu konfiguriert, die erste Anzahl von Unterbrechungsverarbeitungsvorgängen für die erste Anzahl von NFC-Unterbrechungssignalen einzuleiten;
die NFC-Komponente ist ferner dazu konfiguriert: eine zweite Anzahl von NFC-Unterbrechungssignalen in einem zweiten Zeitraum zu erzeugen und die zweite Anzahl von NFC-Unterbrechungssignalen an den Prozessor (110) zu senden, wobei der zweite Zeitraum nach dem ersten Zeitraum liegt; und
der Prozessor (110) ist ferner dazu konfiguriert, eine dritte Anzahl von Unterbrechungsverarbeitungsvorgängen für die zweite Anzahl von NFC-Unterbrechungssignalen einzuleiten (S304), wobei die dritte Anzahl kleiner als die zweite Anzahl ist;
wobei der Prozessor (110), um die dritte Anzahl von Unterbrechungsverarbeitungsvorgängen für die zweite Anzahl von NFC-Unterbrechungssignalen einzuleiten, ferner dazu konfiguriert ist:
durch die elektronische Vorrichtung (200) zu bestimmen, dass die erste Anzahl größer als ein erster voreingestellter Schwellenwert ist, und die dritte Anzahl von Unterbrechungsverarbeitungsvorgängen für die zweite Anzahl von NFC-Unterbrechungssignalen einzuleiten; und
**dadurch gekennzeichnet, dass** der Prozessor (110), um die dritte Anzahl von Unterbrechungsverarbeitungsvorgängen für die zweite Anzahl von NFC-Unterbrechungssignalen einzuleiten, ferner dazu konfiguriert ist:
durch die elektronische Vorrichtung (200) im zweiten Zeitraum zu bestimmen, dass eine erste Markierung, die angibt, ob die im ersten Zeitraum erzeugte erste Anzahl von NFC-Unterbrechungssignalen größer als der erste voreingestellte Schwellenwert ist, auf einen ersten voreingestellten Identifikator gesetzt wird, wenn die erste Anzahl größer als der Schwellenwert ist, oder auf einen zweiten voreingestellten Identifikator, wenn die erste Anzahl kleiner als der Schwellenwert ist, und durch die elektronische Vorrichtung (200) die dritte Anzahl von Unterbrechungsverarbeitungsvorgängen für die zweite Anzahl von NFC-Unterbrechungssignalen einzuleiten; oder
durch die elektronische Vorrichtung (200) im zweiten Zeitraum zu bestimmen, dass eine zweite Markierung vorhanden ist, die darauf eingestellt ist, anzuzeigen, dass die erste Anzahl der im ersten Zeitraum erzeugten NFC-Unterbrechungssignale größer als der erste voreingestellte Schwellenwert ist, und durch die elektronische Vorrichtung (200) die dritte Anzahl der Unterbrechungsverarbeitungsvorgänge für die zweite Anzahl der NFC-Unterbrechungssignale zu initiieren;
wobei die elektronische Vorrichtung dazu eingerichtet ist, mittels eines Zählers eine Anzahl von NFC-Unterbrechungssignalen zu zählen, die in jedem Zeitraum erzeugt werden, und
nach dem zweiten Zeitraum, bei Erzeugung eines ersten NFC-Unterbrechungssignals in einem nächsten Zeitraum, einen NFC-Produkt-Identifikator durch Lesen von Daten von dem erkannten NFC-Produkt, das dem ersten NFC-Unterbrechungssignal entspricht, zu erhalten und zu bestimmen, dass sich der erhaltene NFC-Produkt-Identifikator von einem NFC-Produkt-Identifikator unterscheidet, der von einem vorherigen NFC-Unterbrechungssignal erhalten wurde;
den Zähler zurückzusetzen; und
die erste Markierung auf den zweiten voreingestellten Identifikator zu modifizieren oder die zweite Markierung zu löschen.

11. Computerlesbares Speichermedium, umfassend Computerbefehle, wobei, wenn die Computerbefehle auf einem elektronischen Gerät (200) ausgeführt werden, das elektronische Gerät (200) dazu befähigt wird, das Verfahren nach einem der Ansprüche 1 bis 9 durchzuführen.

## Revendications

1. Procédé de traitement d'interruption, comprenant :
la détection (S301, S401), par un dispositif électronique (200), d'un produit de communication en champ proche, NFC, et la génération (S301), par le dispositif électronique (200), d'une première quantité de signaux d'interruption NFC dans une première période de temps ;
le déclenchement (S302), par le dispositif électronique (200), d'un premier nombre de traitements d'interruption pour la première quantité de signaux d'interruption NFC ;
la génération (S303), par le dispositif électronique (200), d'une deuxième quantité de signaux d'interruption NFC dans une deuxième période de temps, où la deuxième période de temps est postérieure à la première période de temps ; et
le déclenchement (S304), par le dispositif électronique (200), d'un troisième nombre de traitements d'interruption pour la deuxième quantité de signaux d'interruption NFC, où le troisième nombre est inférieur à la deuxième quantité ;
dans lequel le déclenchement, par le dispositif électronique (200), du troisième nombre de traitements d'interruption pour la deuxième quantité de signaux d'interruption NFC comprend :
la détermination, par le dispositif électronique (200), que la première quantité est supérieure à un premier seuil prédéfini, et le déclenchement du troisième nombre de traitements d'interruption pour la deuxième quantité de signaux d'interruption NFC ;
**caractérisé en ce que** le déclenchement, par le dispositif électronique (200), du troisième nombre de traitements d'interruption pour la deuxième quantité de signaux d'interruption NFC comprend :
la détermination, par le dispositif électronique (200) dans la deuxième période de temps, qu'un premier marqueur, qui indique si la première quantité de signaux d'interruption NFC générés dans la première période de temps est supérieure au premier seuil prédéfini, est réglé sur un premier identifiant prédéfini lorsque la première quantité est supérieure au seuil, ou sur un deuxième identifiant prédéfini lorsque la première quantité est inférieure au seuil, et le déclenchement, par le dispositif électronique (200), du troisième nombre de traitements d'interruption pour la deuxième quantité de signaux d'interruption NFC ; ou
la détermination, par le dispositif électronique (200) dans la deuxième période de temps, qu'un deuxième marqueur qui est réglé pour indiquer que la première quantité de signaux d'interruption NFC générés dans la première période de temps est supérieure au premier seuil prédéfini, est présent, et le déclenchement, par le dispositif électronique (200), du troisième nombre de traitements d'interruption pour la deuxième quantité de signaux d'interruption NFC ;
dans lequel le dispositif électronique compte, au moyen d'un compteur, une quantité de signaux d'interruption NFC générés dans chaque période de temps, et le procédé comprend en outre :
après la deuxième période, lors de la génération d'un premier signal d'interruption NFC dans une période suivante, l'obtention, par le dispositif électronique (200), d'un identifiant de produit NFC en lisant les données du produit NFC détecté correspondant au premier signal d'interruption NFC, et la détermination, par le dispositif électronique (200), que l'identifiant de produit NFC obtenu est différent d'un identifiant de produit NFC obtenu à partir d'un signal d'interruption NFC précédent ;
la réinitialisation, par le dispositif électronique (200), du compteur ; et
la modification, par le dispositif électronique (200), du premier marqueur vers le deuxième identifiant prédéfini, ou l'effacement du deuxième marqueur.

2. Procédé selon la revendication 1, comprenant en outre :
la génération (S305), par le dispositif électronique (200), d'une quatrième quantité de signaux d'interruption NFC dans une troisième période, où la troisième période est postérieure à la deuxième période, la quatrième quantité est inférieure à la première quantité, et la quatrième quantité est inférieure à la deuxième quantité ; et
le déclenchement (S306), par le dispositif électronique (200), d'un quatrième nombre de traitements d'interruption pour la quatrième quantité de signaux d'interruption NFC.

3. Procédé selon la revendication 2, comprenant en outre :
la génération (S307), par le dispositif électronique (200), d'une cinquième quantité de signaux d'interruption NFC dans une quatrième période, où la quatrième période est postérieure à la troisième période, et la cinquième quantité est supérieure à la quatrième quantité ; et
le déclenchement (S308), par le dispositif électronique (200), d'un cinquième nombre de traitements d'interruption pour la cinquième quantité de signaux d'interruption NFC générés au cours de la quatrième période.

4. Procédé selon la revendication 3, comprenant en outre :
la génération (S309), par le dispositif électronique (200), d'une sixième quantité de signaux d'interruption NFC dans une fivème période, où la fivème période est postérieure à la quatrième période, et la sixième quantité est supérieure à la quatrième quantité ; et
le déclenchement (S310), par le dispositif électronique (200), d'un septième nombre de traitements d'interruption pour la sixième quantité de signaux d'interruption NFC générés au cours de la fivème période, où le septième nombre est inférieur à la sixième quantité.

5. Procédé selon l'une quelconque des revendications 1 à 4, dans lequel le déclenchement d'un traitement d'interruption comprend au moins l'un parmi : la génération d'un événement d'interruption NFC, l'envoi d'un message de diffusion NFC, où le message de diffusion NFC est un message de diffusion au niveau du système d'exploitation déclenché par un événement NFC, et est délivré au sein du dispositif électronique aux applications enregistrées pour écouter les événements NFC, et le démarrage d'une application NFC cible pour une fois ; et
le déclenchement du premier nombre de traitements d'interruption comprend au moins l'un des éléments suivants : générer la première quantité d'événements d'interruption NFC, envoyer la première quantité de messages de diffusion NFC, et démarrer l'application NFC cible X fois, où X est égal à la première quantité.

6. Procédé selon l'une quelconque des revendications 1 à 5, comprenant en outre :
déterminer (S304), par le dispositif électronique (200) dans la deuxième période de temps, que le dispositif électronique (200) ne remplit pas une première condition prédéfinie, où
la première condition prédéfinie comprend au moins l'un des éléments suivants : le dispositif électronique (200) est dans un état d'écran allumé, une application au premier plan du dispositif électronique (200) est une application NFC dans le dispositif électronique (200), et un composant NFC dans le dispositif électronique (200) est dans un mode écriture.

7. Procédé selon l'une quelconque des revendications 1 à 6, comprenant en outre :
afficher, par le dispositif électronique (200), des premières informations d'invite (20, 21) après la première période de temps, dans lequel les premières informations d'invite (20, 21) sont utilisées pour indiquer à un utilisateur qu'un produit NFC anormal touche le dispositif électronique (200), et conseiller à l'utilisateur de placer séparément le dispositif électronique (200) et le produit NFC.

8. Procédé selon l'une quelconque des revendications 1 à 7, dans lequel le traitement d'interruption comprend :
recevoir (S403), par l'application NFC cible dans le dispositif électronique (200), un message de diffusion NFC, dans lequel le message de diffusion NFC est un message de diffusion au niveau du système d'exploitation déclenché par un événement NFC, et est distribué au sein du dispositif électronique aux applications enregistrées pour écouter les événements NFC ; et traiter une interruption NFC, dans lequel une application NFC cible représente une application NFC qui se trouve dans le dispositif électronique (200) et qui est enregistrée pour écouter un message NFC, le message de diffusion NFC est généré sur la base d'un événement d'interruption NFC, l'événement d'interruption NFC est généré par le dispositif électronique (200) sur la base du signal d'interruption NFC, et le message de diffusion NFC comprend un identifiant du produit NFC et/ou un type du produit NFC.

9. Procédé selon la revendication 8, dans lequel le déclenchement d'un troisième nombre de traitements d'interruption comprend :
lancer, par le dispositif électronique (200), un traitement d'interruption cible, et afficher des secondes informations d'invite (10), dans lequel les secondes informations d'invite (10) comprennent une option d'au moins une application NFC, et le traitement d'interruption cible est l'un du troisième nombre de fois du traitement d'interruption.

10. Dispositif électronique (200), dans lequel le dispositif électronique (200) comprend un composant de communication en champ proche, NFC, une mémoire (121), et un ou plusieurs processeurs (110) ; et la mémoire (121) est connectée électriquement au composant NFC et au processeur (110) ; et
l'affichage (194) est configuré pour afficher (194) une image générée par le processeur (110), la mémoire (121) est configurée pour stocker un code de programme informatique, et le code de programme informatique est exécuté pour mettre en œuvre le procédé suivant :
le composant NFC est configuré pour : détecter (S301, S401) un produit NFC, générer une première quantité de signaux d'interruption NFC dans une première période de temps, et envoyer la première quantité de signaux d'interruption NFC au processeur (110) ;
le processeur (110) est configuré pour initier le premier nombre de traitements d'interruption pour la première quantité de signaux d'interruption NFC ;
le composant NFC est en outre configuré pour : générer (S303) une deuxième quantité de signaux d'interruption NFC dans une deuxième période de temps, et envoyer la deuxième quantité de signaux d'interruption NFC au processeur (110), dans lequel la deuxième période de temps est postérieure à la première période de temps ; et
le processeur (110) est en outre configuré pour initier (S304) un troisième nombre de traitements d'interruption pour la deuxième quantité de signaux d'interruption NFC, dans lequel le troisième nombre est inférieur à la deuxième quantité ;
dans lequel le processeur (110), pour initier le troisième nombre de traitements d'interruption pour la deuxième quantité de signaux d'interruption NFC, est en outre configuré pour :
déterminer, par le dispositif électronique (200), que la première quantité est supérieure à un premier seuil prédéfini, et initier le troisième nombre de traitements d'interruption pour la deuxième quantité de signaux d'interruption NFC ; et
**caractérisé en ce que** le processeur (110), pour initier le troisième nombre de traitements d'interruption pour la deuxième quantité de signaux d'interruption NFC, est en outre configuré pour :
déterminer, par le dispositif électronique (200) dans la deuxième période de temps, qu'un premier marqueur, qui indique si la première quantité de signaux d'interruption NFC générés dans la première période de temps est supérieure au premier seuil prédéfini, est réglé sur un premier identifiant prédéfini lorsque la première quantité est supérieure au seuil, ou sur un deuxième identifiant prédéfini lorsque la première quantité est inférieure au seuil, et initier, par le dispositif électronique (200), le troisième nombre de traitements d'interruption pour la deuxième quantité de signaux d'interruption NFC ; ou
déterminer, par le dispositif électronique (200) dans la deuxième période temporelle, qu'un deuxième marqueur qui est défini pour indiquer que la première quantité de signaux d'interruption NFC générés dans la première période temporelle est supérieure au premier seuil prédéfini, est présent, et initier, par le dispositif électronique (200), le troisième nombre de traitements d'interruption pour la deuxième quantité de signaux d'interruption NFC ;
dans lequel le dispositif électronique est adapté pour compter, en utilisant un compteur, une quantité de signaux d'interruption NFC générés dans chaque période temporelle, et
après la deuxième période temporelle, lors de la génération d'un premier signal d'interruption NFC dans une période temporelle suivante, pour obtenir un identifiant de produit NFC en lisant des données du produit NFC détecté correspondant au premier signal d'interruption NFC, et pour déterminer que l'identifiant de produit NFC obtenu est différent d'un identifiant de produit NFC obtenu à partir d'un signal d'interruption NFC précédent ;
pour réinitialiser le compteur ; et
pour modifier le premier marqueur en le deuxième identifiant prédéfini, ou pour effacer le deuxième marqueur.

11. Support de stockage lisible par ordinateur, comprenant des instructions informatiques, dans lequel lorsque les instructions informatiques sont exécutées sur un dispositif électronique (200), le dispositif électronique (200) est activé pour mettre en œuvre le procédé selon l'une quelconque des revendications 1 à 9.
